# EUROPEAN PATENT APPLICATION

(11) **EP 4 773 005 A1**
(43) Date of publication of application: **08.07.2026**
(21) Application number: 25225030.3
(22) Date of filing: 18.12.2025
(51) Int. Cl.: G06F 9/50

(54) **THERMAL AND POWER AWARE VIRTUAL MACHINE PLACEMENT AND REQUEST ROUTING IN A DATA CENTER**

(30) Priority: 02.01.2025 US 202519008459
(71) Applicant: Microsoft Technology Licensing, LLC, Redmond, WA 98052-6399 (US)
(72) Inventor: Zhang, Chaojie, Redmond, WA, 98052 (US); Bianchini, Ricardo Gouvea, Redmond, WA, 98052 (US); Choukse, Esha, Redmond, WA, 98052 (US); Stojkovic, Jovan, Champaign, IL, 61820 (US); Qiu, Haoran, Redmond, WA, 98052 (US); Torrellas, Josep, Champaign, IL, 61822 (US); Presa, Íñigo Goiri, Redmond, WA, 98052 (US); Fonseca, Rodrigo Lopes Cancado, Redmond, WA, 98052 (US)
(74) Representative: Grünecker Patent- und Rechtsanwälte PartG mbB

(57) **Abstract**

Systems, methods, and computer program products are disclosed for thermal and power aware virtual machine (VM) placement in a data center including a set of rows separated by a set of aisles. When deploying a set of VMs in a data center for workload execution, a subset of candidate aisles that have sufficient estimated airflow capacity to host the set of VMs and a subset of candidate rows that have sufficient estimated power capacity to host the VMs are determined. A set of servers is selected in the subset of candidate aisles and in the subset of candidate rows based at least on a workload type associated with the workload, a distribution of workloads of the workload type in the subset of candidate aisles, and a distribution of workloads of the workload type in the subset of candidate rows. The set of VMs are deployed to the set of servers.

## Description

### BACKGROUND

Oversubscription is the practice of allocating more virtualized or shared resources than the physical infrastructure can handle at full capacity, based on the assumption that not all workloads will require their maximum resources simultaneously. When allocating virtualized or shared resources in a data center, considerations include workload demands, cooling, and/or power demands. While oversubscription enables data centers to optimize resource utilization and reduce costs, oversubscription comes with risks, such as performance degradation during peak usage and potential resource exhaustion. These challenges can be mitigated with proper capacity planning, monitoring tools, and policies. Oversubscription allows data centers to balance cost savings with performance reliability when carefully managed.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Systems, methods, and computer program products are disclosed for thermal and power aware virtual machine (VM) placement in a data center. When placing a workload for execution on a set of VMs in a data center, a set of servers is selected based on estimated airflow capacity of aisles in the data center and estimated power capacity of rows in the data center as servers. The VMs associated with the workload are deployed to the set of servers.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.
FIG. 1 shows a block diagram of an example system for thermal and power aware VM placement in a data center, in accordance with an embodiment.
FIG. 2 shows a block diagram of an example system for thermal and power aware instance management in a data center, in accordance with an embodiment.
FIG. 3 shows a block diagram of an example data center, in accordance with an embodiment.
FIG. 4 shows a flowchart of an example process for thermal and power aware VM placement in a data center, in accordance with an embodiment.
FIG. 5 shows a flowchart of an example process for thermal and power aware request routing in a data center, in accordance with an embodiment.
FIG. 6 depicts a flowchart of an example process for thermal and power aware workload instance reconfiguration in a data center, in accordance with an embodiment.
FIG. 7 shows a flowchart of an example process for thermal and power aware workload instance migration in a data center, in accordance with an embodiment.
FIG. 8 shows a flowchart of an example process for thermal and power aware VM placement in a data center, in accordance with an embodiment.
FIG. 9 shows a flowchart of an example process for thermal and power aware VM deployment in a data center, in accordance with an embodiment.
FIG. 10 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments

The rising demand for generative large language models (LLMs) poses challenges for thermal and power management in cloud data centers. Traditional techniques are often sub-optimal for LLM inference workloads due to the fine-grained, millisecond-scale execution phases, which may have distinct performance, thermal, and/or power profiles. For instance, LLM inference request handling include a compute-intensive prefill phase where a prompt is processed in parallel and a memory-intensive decode phase where output tokens are generated sequentially, each with distinct latency, throughput, memory, thermal, and/or power characteristics. The unique characteristics of the LLM inference phases provide opportunities to further optimize thermal and/or power performance in data centers. Additionally, LLM inference workloads are sensitive to various configuration parameters (e.g., model parallelism, size, and/or quantization) that involve tradeoffs between performance, temperature, power, and/or output quality.

In embodiments, LLMs hosted in the cloud execute on virtual machines (VMs) running on GPUs (graphic processing units). GPUs consume significant power, challenging the cooling and power capacities of data centers, and contributing significantly to data center costs. Often, data centers hosting LLM workloads are organized into rows of server racks equipped with cooling systems to dissipate heat and a power hierarchy for efficient power distribution. The cooling efficiency in a data center can vary spatially (e.g., based on GPU location within a server and/or data center) and temporally (e.g., based on outdoor temperatures that vary by time of day and/or season).

Often, a data center is arranged in rows of server racks separated by cold aisles and/or hot aisles, where two rows of servers within the data center can share a cold aisle or a hot aisle. Often, AHUs blow cold air from the cooling devices (e.g., adiabatic cooling towers in evaporative cooling) into the cold aisles, where servers in the adjacent rows of server racks use fans to draw cold air from the aisle, pass it through the server (including the GPUs contained therein), and exhaust the heated air into an corresponding hot aisle. Often, the heated air is returned to the cooling devices where it is cooled it down again. To prevent heated air in the hot aisles from returning to the cold aisles the airflow provided by an AHU in a cold aisle needs to exceed the aggregate airflow demands consumed by the servers in the cold aisle.

Often, a data center power system is implemented using a three-level power distribution hierarchy to deliver electricity from the utility grid to individual servers and/or GPUs. For instance, at a first level, an Automatic Transmission Switch (ATS) directs power from the grid to Uninterruptible Power Supplies (UPSs). At a second level, the UPSs share the data center power load with a series of Power Distribution Unit (PDU) pairs. The PDU pairs further step down the voltage and support multiple rows of server racks. To prevent tripping of circuit breakers, data center operators often provision for peak power usage at each level of the hierarchy to account for worst-case scenarios servers share a common power supply in the power hierarchy. For safety reasons, when the total power draw exceeds the capacity of the power supply, servers within that level are, in embodiments, power-capped. To avoid power capping, LLM workloads are, in embodiments, distributed across rows of the data center to balance the power demands between the rows of the data center.

In embodiments, historical temperature and power data, such as, but not limited to, data on inlet and outlet temperatures for each server, the outside temperature, and/or the temperature and power of each component (e.g., GPU and memory) are collected on a periodic basis (e.g., every 10 minutes). In embodiments, the historical temperature and power data is combined with other data center information, such as, but not limited to, data center layout information (e.g., GPU location within a server and/or data center), LLM workload information, GPU load information, and/or airflow information, using regression analysis to generate a historical profile. For instance, historical information associated with the LLM workload is used to determine the effect of the LLM workload on GPU load, temperatures within the data center, power demands within the data center, airflow demands within the data center, and the like.

Embodiments disclosed herein leverage historical temperature and power data, along with the adaptability of SaaS workloads, to: (1) efficiently place new GPU workload VMs within cooling and power constraints, (2) route LLM inference requests across SaaS VMs, and (3) reconfigure SaaS VMs to manage load spikes and emergency situations. For instance, new GPU workload VMs associated with LLM workloads are placed (i.e., deployed) in the data center based on the expected demands of the LLM workloads, the thermal capacities associated with the cold aisles of the data center, the power capacities associated with the rows of the data center, and a workload type (e.g., IaaS or SaaS) associated with the LLM workloads. In embodiments, the load of a new VM is estimated based on the load from VMs associated with the same user for IaaS workloads and/or the same endpoint for SaaS workloads. In embodiments, peak load is assumed if historical data is insufficient to determine an accurate estimation.

Based on the estimated loads of VMs deployed in the data center, in embodiments, remaining airflow capacities are estimated for the cold aisles and remaining power capacities are estimated for the rows of the data center. When deploying new VMs for an LLM workload, in embodiments, a subset of candidate cold aisles is determined based on the cold aisles estimated to have sufficient airflow capacities to accommodate the estimated airflow demands of the new VMs, and a subset of candidate rows is determined based on the rows estimated to have sufficient power capacities to accommodate the estimated power demands of the new VMs. In embodiments, the new VMs are deployed to a set of servers in the subset of candidate cold aisles and the subset of candidate rows that are selected in order to balance IaaS and SaaS workloads across cold aisles and/or rows of the data center.

In embodiments, new VMs associated with IaaS workloads are deployed to cooler servers because fine-grained control over IaaS VMs is limited. In embodiments, peak GPU temperatures are estimated for GPUs in the data center based on the historical profile and the estimated load of the new VMs. In embodiments, new VMs associated with new IaaS workloads are placed on servers with lower estimated GPU temperatures, while new VMs associated with SaaS workloads are placed on servers with higher estimated GPU temperatures.

In embodiments, new VMs are deployed in the data center based on the workload type (i.e., IaaS workload or SaaS workload) in order to balance the IaaS and SaaS workloads in the cold aisles and rows of the data center. For instance, new VMs associated with IaaS workloads are placed in cold aisles and/or rows of the data center that are SaaS-heavy, while new VMs associated with SaaS workloads are placed in cold aisles and/or rows of the data center that are IaaS-heavy.

In embodiments, VM placement is recalculated to determine better placements and VMs are migrated to address mispredictions or changes in workload behavior. For instance, to migrate SaaS workloads, a new VM is created for the SaaS workload, the workload is transferred to the new VM, and the old VM is decommissioned.

In embodiments, incoming requests associated with a workload are routed to VM instances based on the current airflow demands of the cold aisles in the data center, the current power demands of the rows in the data center, and/or the current load of servers of the data center. In embodiments, the total airflow demand for the cold aisles in the data center are periodically (e.g., every 5 minutes) calculated based on the estimated load on the servers adjacent to the cold aisles, and incoming requests are routed to VM instances in a manner that will not cause the total airflow demand for a cold aisle to exceed the airflow capacity of the AHU associated with the cold aisle. In embodiments, the total power demand for the servers in the rows of the data center are periodically (e.g., every 5 minutes) calculated based on the estimated load on the servers in the rows, and incoming requests are routed to VM instances in a manner that will not cause the total power demand for a row to exceed the power capacity of the row (resulting in power capping). In embodiments, current server load is monitored, and incoming requests are routed to VM instances in a manner that will not cause GPU temperatures to exceed a predetermined thermal threshold.

In embodiments, during spikes in load and/or emergency events (e.g., data center component failure, etc.), VM instances associated with SaaS workloads are reconfigured to ensure that servers remain within thermal and/or power limits. For instance, the maximum allowable airflow, GPU temperature, and server power are calculated for VM instances, and used to modify model parameters, such as, but not limited to, optimal GPU frequency, batch size, model parallelism, quantization, and/or model size, to maximize goodput while remaining within the thermal and/or power limits. In embodiments, modifying model parameters (e.g., parallelism, size, and/or quantization level) requires reloading the model, which can take a few seconds. In embodiments, incoming requests are prevented from being routed to VM instances during modification of model parameters.

In embodiments, during cooling and/or power failure, airflow capacities are recalculated for the cold aisles in the data center, power capacities are recalculated for the rows in the data center, and server capacities are recalculated for the servers in the data center. Based on the recalculated airflow capacities, power capacities, and/or server capacities, incoming requests are routed to less constrained cold aisles, rows, and/or servers to relieve pressure on thermal and/or power constrained servers. In embodiments, model parameters of VM instances executing on thermal and/or power constrained servers are modified to reduce the thermal and/or power demands of the VM instances on the thermal and/or power constrained servers. In embodiments, VM instances associated with IaaS VMs are power capped as a last resort to keep airflow, and/or power demands within thermal and/or power limits.

Employing embodiments disclosed herein enable reductions in the cooling and power requirements needed to run the same workload. Furthermore, employing historical information provides improved estimations of workload cooling and power requirements, thereby enabling more precise provisioning. In the event of cooling and/or power failure, embodiments disclosed herein recalculate the new available airflow for each aisle, the power for each row, and/or the inlet temperature for each server, and steers requests away from constrained servers. Furthermore, instance configurators can reconfigure workload instances to decrease the data center loads accordingly.

These and further embodiments enable the functionality described above and additional functionality. Such embodiments are described in further detail as follows.

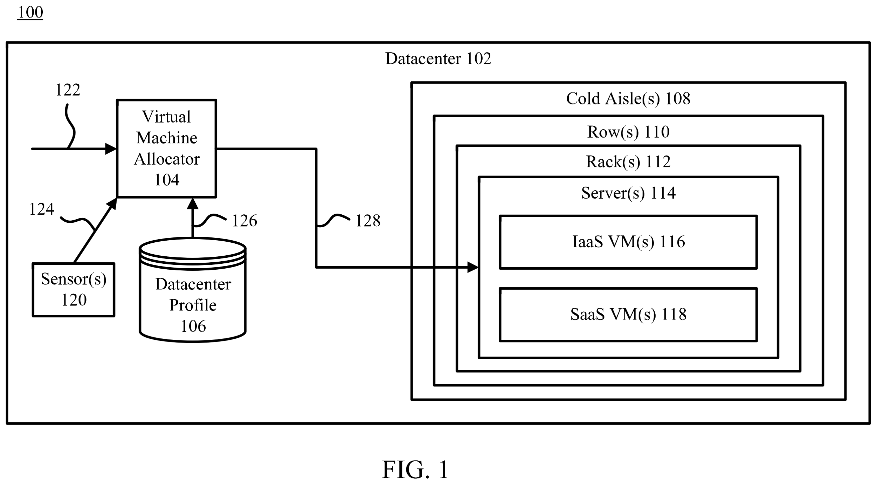

For example, FIG. 1 shows a block diagram of an example system 100 for thermal and power aware VM placement in a data center, in accordance with an embodiment. As shown in FIG. 1, system 100 includes a data center 102 that comprises a virtual machine (VM) allocator 104, data center profile storage 106, one or more cold aisles 108, and one or more sensors 120. Cold aisle(s) 108 include one or more rows 110 of one or more racks 112 of servers 114. Server(s) 114 include one or more VMs executing thereon, such as, but not limited to, one or more infrastructure-as-a-service (IaaS) VMs 116 and/or one or more software-as-a-service (SaaS) VMs 118. System 100 is described in further detail as follows.

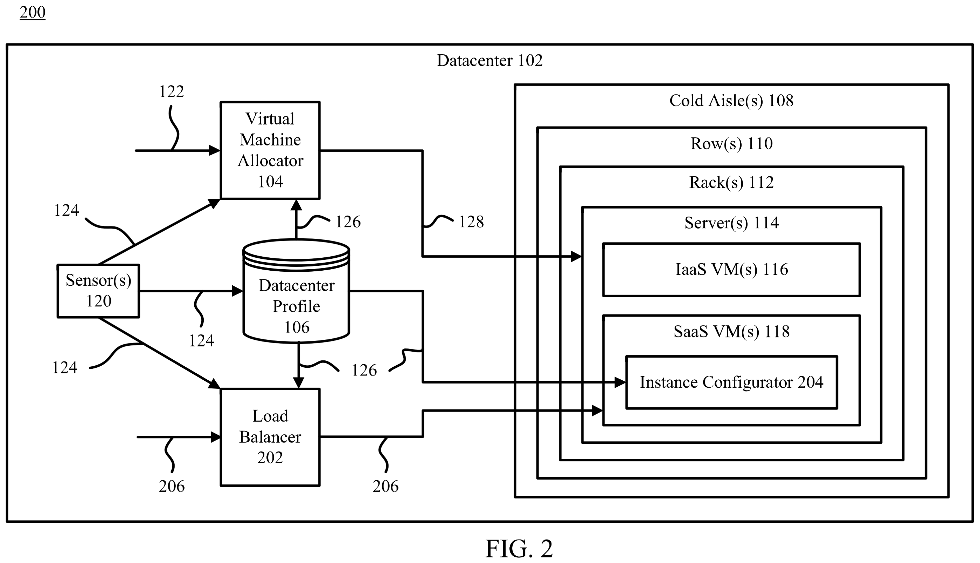

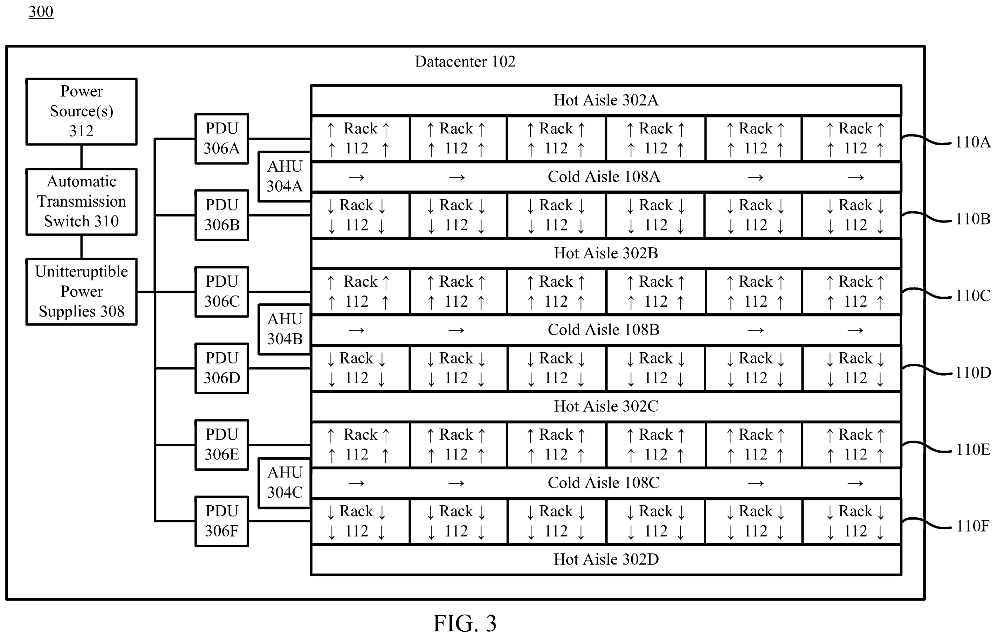

Data center 102 comprises a facility that houses computing resources, such as, but not limited to, servers, server racks, cooling infrastructure, power infrastructure, and/or the like. In embodiments, data center 102 comprises row(s) 110 of rack(s) 112 of server(s) 114, the row(s) 110 separated by cold aisle(s) 108. In embodiments, data center 102 includes sensor(s) 120 that provide thermal, power, and/or load information associated data center 102 and/or components thereof. In embodiments, data center 102 supports public cloud computing services, such as, but not limited to, IaaS, SaaS, LLM services, and/or the like. Data center 102 will be described in greater detail below in conjunction with FIGS. 2 and 3.

VM allocator 104 is configured to deploy new VMs 128 associated with a workload 122 to a set of server(s) 114 in the data center based on estimated airflow capacities associated with cold aisle(s) 108, estimated power capacities associated with row(s) 110, and/or estimated load capacities associated with server(s) 114. In embodiments, VM allocator 104 estimates the airflow capacity and/or power capacity for cold aisle(s) 108 and/or row(s) 110, respectively, and determines a subset of cold aisle(s) 108 and a subset of row(s) 110 that respectively have sufficient estimated thermal capacities and power capacities to host new VMs 128 associated with workload 122.

In embodiments, VM allocator 104 selects the set of server(s) 114 based at least on a workload type associated with the workload, a distribution of the workload type in the subset of candidate aisles, and a distribution of the workload type in the subset of candidate rows. For instance, when workload 122 is an IaaS workload, new VMs 128 associated with workload 122 are deployed to server(s) 114 estimated to have lower GPU temperatures because fine-grained control over IaaS VMs 128 is limited, and when workload 122 is a SaaS workload, new VMs 128 associated with workload 122 are deployed to server(s) 114 estimated to have higher GPU temperatures. In embodiments, when workload 122 is an IaaS workload, new VMs 128 associated with workload 122 are deployed to servers in cold aisle(s) 108 and/or row(s) 110 of data center 102 that are SaaS-heavy, and when workload 122 is a SaaS workload, new VMs 128 associated with workload 122 are deployed to servers in cold aisle(s) 108 and/or row(s) 110 of data center 102 that are IaaS-heavy.

Data center profile storage 106 is configured to store one or more historical profiles 126 corresponding to one or more workloads. In embodiments, historical profile(s) 126 comprise one or more regression functions and/or equations that enable components of data center 102 to estimate an expected load of the workload associated with the profile, and/or the effect of the expected load on temperatures at various locations internal and/or external to data center 102 and/or components thereof, on thermal demands in data center 102 and/or components thereof, on power demands in data center 102 and/or components thereof, and/or the like. In embodiments, the regression function(s) of historical profile(s) 126 are determined through regression analysis of historical data associated with corresponding workload(s).

Cold aisle(s) 108 comprise areas between row(s) 110 that allow cooling air to flow to server(s) 114 of rack(s) 112 to enable cooling of server(s) 114 and/or components thereof. In embodiments, two rows 110 are separated by and share a cold aisle 108.

Row(s) 110 comprise rack(s) 112 of server(s) 114. In embodiments, server(s) 114 in a same row 110 share power infrastructure components and power capacity associated with the row. In embodiments, two rows 110 are separated by a cold aisle 108 and server(s) 114 of the two rows 110 share airflow capacity associated with the cold aisle.

Rack(s) 112 comprise a frame or enclosure configured to hold and/or organize multiple pieces of computing equipment, such as, but not limited to, servers, storage devices, networking hardware, cooling components, power components, and/or the like. In embodiments, rack(s) 112 include cooling components (e.g., fans, heat exchangers, etc.) that draw cool air from cold aisle(s) 108 into rack(s) 112 and over server(s) 114 and/or components thereof.

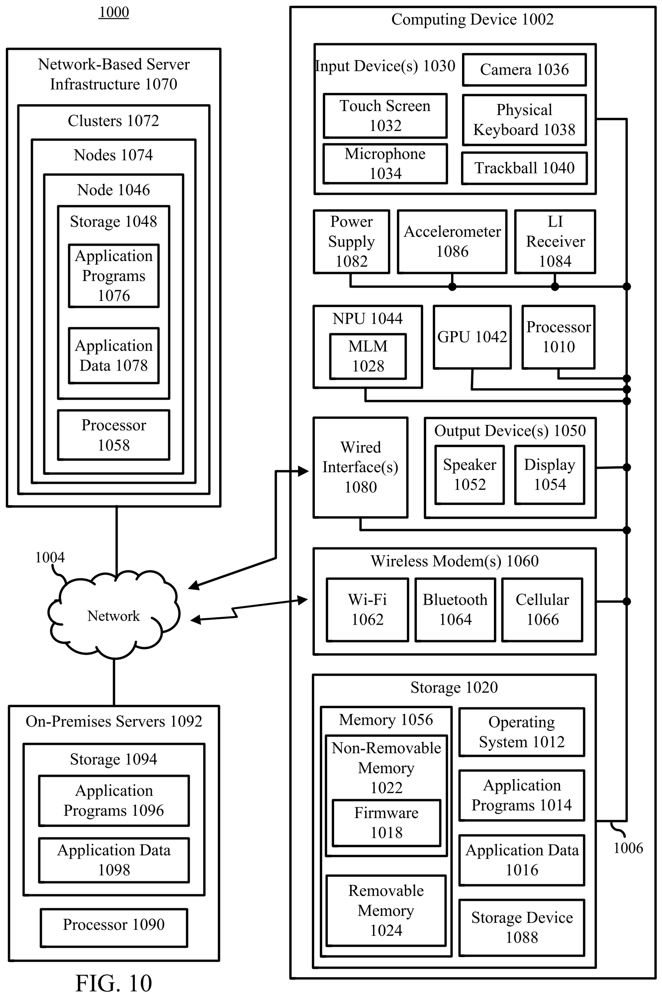

Server(s) 114 comprise a computing device that is configured to execute one or more VMs deployed thereon. In embodiments, server(s) 114 comprise GPUs for executing VMs deployed thereon, such as, but not limited to, IaaS VM(s) 115 and/or SaaS VM(s) 118. Various example implementations of server 114 are described below in reference to FIG. 10 (e.g., computing device 1002, nodes 1074, node 1046, and/or components thereof).

IaaS VM(s) 116 comprise VMs that execute IaaS workloads. In embodiments, workloads executing on IaaS VM(s) 116 are opaque to the cloud services provider, and can include any type of workload (e.g., inference, training, fine-tuning, etc.) for any type of model (e.g., LLM, diffusion, image recognition, etc.). In embodiments, the cloud services provider has little or no control over parameters of the workload and/or the model executing in IaaS VM(s) 116.

SaaS VM(s) 118 comprise VMs that execute SaaS workloads, such as, but not limited to, LLM inference workloads. In embodiments, SaaS VM(s) 118 execute LLM instances that are reconfigurable by the cloud services provider. For instance, LLM instances executing in SaaS VM(s) 118 have adjustable configuration parameters to adjust a GPU frequency of a GPU executing the LLM instance, a model parallelism associated with the LLM instance, a batch size of the LLM instance, a model size of the LLM instance, and/or a model quantization of the LLM instance. In embodiments, the adjustable configuration parameters of LLM instances executing on SaaS VM(s) 118 are adjusted to ensure that components of data center 112 remain within thermal, power, and/or load constraints.

Sensor(s) 120 comprise hardware and/or software components for collecting measurements 124 from data center 102 and/or components thereof. In embodiments, measurements 124 collected by sensor(s) 120 include, but are not limited to, temperature from various locations internal and/or external to data center 102 and/or components thereof, fan speeds (e.g., rpm, etc.) from fans internal and/or external to data center 102 and/or components thereof, airflow data from various locations internal and/or external to data center 102 and/or components thereof, power supply data from components of data center 102, power demand data from components of data center 102, failure of components in data center 102, and/or the like. In embodiments, sensor(s) 120 collect measurements 124 on a continuous, a periodic and/or an on-demand basis. In embodiments, measurements 124 collected by sensor(s) 120 are logged for in various formats, such as, but not limited to, time-series data, averaged data, timestamped data, and/or the like, and provided to components of data center 102 to perform VM placement, VM migration, VM reconfiguration, request routing, and/or load balancing.

Embodiments described herein may operate in various ways to perform thermal and power aware instance management in a data center. For instance, FIG. 2 shows a block diagram of an example system 200 for thermal and power aware instance management in a data center, in accordance with an embodiment. As shown in FIG. 2, system 200 comprises data center 102, VM allocator 104, data center profile storage 106, cold aisle(s) 108, row(s) 110, rack(s) 112, server(s) 114, IaaS VM(s) 116, SaaS VM(s) 118, and sensor(s) 120. In system 200, data center 102 further includes a load balancer 202, and SaaS VM(s) 118 further include an instance configurator 204. System 200 is described in further detail as follows.

Load balancer 202 is configured to distribute an incoming request 206 for a SaaS workload to SaaS VM(s) 118 based on thermal and/or power demands and/or capacities of aisles, rows and/or servers associated with SaaS VM(s) 118. For instance, load balancer 202 estimates, based on measurements 124 from sensor(s) 120, total airflow demand for cold aisle(s) 108, total power demand for row(s) 110, and/or the current load on server(s) 114. In embodiments, load balancer 202 determines airflow capacities for cold aisle(s) 108, power capacities for row(s) 110, and/or server capacities for server(s) 114. In embodiments, load balancer 202 routes incoming request 206 in a manner that ensures that data center 102 and/or components thereof remain within thermal and/or power constraints. For instance, load balancer 202 prevents routing of incoming request 206 to thermal, power, and/or computing constrained server(s) 114 that do not have sufficient thermal, power, and/or computing capacity to handle incoming request 206. In embodiments, load balancer 202 routes incoming request 206 to server(s) 114 that are not thermal, power, and/or computing constrained based on one or more load balancing policies, such as, but not limited to, routing incoming request 206 to SaaS VM(s) 118 that have previously handled requests from the same customer in order to maximize cache reuse, concentrating loads on server(s) 114 to reduce energy consumption, and/or distributing requests across SaaS VM(s) 118 to optimize performance (e.g., latency, throughput, etc.).

Instance configurator 204 is configured to adjust parameters of workload instances executing on SaaS VM(s) 118 based on measurements 124 collected from sensor(s) 120. In embodiments, instance configurator 204 modifies adjustable configuration parameters, such as, but not limited to, a GPU frequency of a GPU executing the LLM instance, a model parallelism associated with the LLM instance, a batch size of the LLM instance, a model size of the LLM instance, and/or a model quantization of the LLM instance. In embodiments, instance configurator 204 modifies the adjustable configuration parameters of LLM instances executing on SaaS VM(s) 118 to ensure that components of data center 112 remain within thermal, power, and/or load constraints. In embodiments, instance configurator 204 modifies the adjustable configuration parameters of LLM instances executing on SaaS VM(s) 118 responsive to one or more of: failure of a component of data center 102, changes in the cooling and/or power supply and/or demand of data center 102 and/or components thereof, changes in workload behavior of workloads executing in data center 102, and/or the like. In embodiments, instance configurator 204 restarts a workload instance executing on SaaS VM(s) 118 as part of, or subsequent to, the modification of the adjustable configuration parameters of LLM instances executing on SaaS VM(s) 118.

In embodiments, instance configurator 204 adjusts a GPU frequency of a GPU executing a SaaS workload instance in order to control the temperature and/or power consumption of the GPU. For example, instance configurator 204 reduces a GPU frequency of a GPU executing a SaaS workload instance in order to reduce the thermal and/or power demands associated with the SaaS workload instance when airflow, power, and/or thermal demands of a respective aisle, row, and/or server associated with the SaaS workload instance satisfies a respective airflow, power, and/or thermal condition (e.g., maximum airflow demand, maximum power demand, maximum temperature, etc.). In instances, instance configurator 204 increases a GPU frequency of a GPU executing a SaaS workload instance in order improve the performance (e.g., inference accuracy, etc.) of the workload (e.g., LLM inference workload) to satisfy service level agreements.

In embodiments, instance configurator 204 adjusts a model parallelism (e.g., Tensor parallelism) of a SaaS workload instance in order to control the thermal and/or power demands associated with the SaaS workload instance. For example, instance configurator 204 adjusts the number of GPUs that execute the SaaS workload instance in parallel to change the thermal and/or power demands associated with the SaaS workload instance. For example, reducing the number of GPUs executing a SaaS workload instance will reduce the power demand because less GPUs are employed, but it will also increase the thermal demand of the server because the same amount of work is concentrated on fewer GPUs, thereby resulting in an increase in the temperature of the hottest GPU in the server. In embodiments, instance configurator 204 adjusts a model parallelism of the SaaS workload instance based on the type of resource constraint being faced. For instance, when airflow and/or thermal demands are nearing airflow and/or thermal constraints, instance configurator 204 increases a model parallelism to spread the work across more GPUs to reduce the temperature of hottest GPU in the server, and when power demands are nearing power constraints, instance configurator 204 decreases a model parallelism to reduce the power demands associated with the SaaS workload instance.

In embodiments, instance configurator 204 adjusts a batch size of a SaaS workload instance in order to control the thermal and/or power demands associated with the SaaS workload instance. For example, the thermal and/or power demands associated with the SaaS workload instance vary based on the batch size and/or the inference phase associated with the SaaS workload instance. In embodiments, the thermal and/or power demands associated with the SaaS workloads are included in historical profile(s) 216. In embodiments, instance configurator 204 adjusts a batch size of the SaaS workload instance based on the type of resource constraint (e.g., thermal constraint, power constraint, airflow constraint, etc.) being faced and/or the inference phase (e.g., prefill phase, decode phase, etc.) the SaaS workload is executing. For instance, instance configurator 204 selects a batch size based on the thermal and/or power demands associated with the SaaS workloads are included in historical profile(s) 216 depending on the type of resource constraint (e.g., thermal constraint, power constraint, airflow constraint, etc.) being faced and/or the inference phase (e.g., prefill phase, decode phase, etc.) the SaaS workload is executing .

In embodiments, instance configurator 204 adjusts a model size associated with a SaaS workload instance in order to control the thermal and/or power demands associated with the SaaS workload instance. For example, instance configurator 204 reduces model size associated with a SaaS workload instance in order to reduce the thermal and/or power demands associated with the SaaS workload instance when airflow, power, and/or thermal demands of a respective aisle, row, and/or server associated with the SaaS workload instance satisfies a respective airflow, power, and/or thermal condition (e.g., maximum airflow demand, maximum power demand, maximum temperature, etc.). In instances, instance configurator 204 increases a model size associated with a SaaS workload instance in order improve the performance (e.g., inference accuracy, etc.) of the workload (e.g., LLM inference workload) to satisfy service level agreements.

In embodiments, instance configurator 204 adjusts a model quantization associated with a SaaS workload instance in order to control the thermal and/or power demands associated with the SaaS workload instance. For example, instance configurator 204 reduces model quantization associated with a SaaS workload instance in order to reduce the thermal and/or power demands associated with the SaaS workload instance when airflow, power, and/or thermal demands of a respective aisle, row, and/or server associated with the SaaS workload instance satisfies a respective airflow, power, and/or thermal condition (e.g., maximum airflow demand, maximum power demand, maximum temperature, etc.). In instances, instance configurator 204 increases a model quantization associated with a SaaS workload instance in order improve the performance (e.g., inference accuracy, etc.) of the workload (e.g., LLM inference workload) to satisfy service level agreements.

Embodiments described herein may operate in various ways to implement a data center. For instance, FIG. 3 shows a block diagram of an example data center 300, in accordance with an embodiment. As shown in FIG. 3, system 300 comprises data center 102, cold aisle(s) 108A-108C, row(s) 110A-110F, and rack(s) 112. In system 300, data center 102 further includes one or more hot aisles 302A-302D, one or more air handling units (AHU) 304A-304C associated with cold aisle(s) 108A-108C, one or more power distribution units (PDU) 306A-306F associated with row(s) 110A-110F, one or more uninterruptible power supplies 308, an automatic transmission switch (ATS) 310, and one or more power sources 312. System 200 is described in further detail as follows.

Hot aisle(s) 302A-302D comprise areas between row(s) 110 that allow heated air to flow away from server(s) 114 of rack(s) 112. In embodiments, heated air flows from cold aisle(s) 108A-108C, across rack(s) 112 in row(s) 110, and into hot aisle(s) 302A-302D, where the heated air flows back to a cooling system (e.g., heat exchanger, etc.) that cools the heated air before it is returned to cold aisle(s) 108. In embodiments, heated air flowing through hot aisle(s) 302A-302D is used for heating purposes, such as, but not limited to, heating an ambient space, heating water, and/or the like. In embodiments, heated air flowing through hot aisle(s) 302A-302D is flowed to a location external to data center 102. In embodiments, two rows 110 are separated by and share a hot aisle 302.

AHU(s) 304A-304C are configured to condition and/or circulate cooling air in cold aisle(s) 108 by regulating temperature, humidity, and/or air quality. In embodiments, AHU(s) 304A-304C comprise fans, cooling coils, filters, and/or dampers that work together to control the air quality and/or airflow of cooling air in cold aisle(s) 108. In embodiments, AHU(s) 304A-304C operate in conjunction with data center-level cooling systems (e.g., adiabatic cooling towers in evaporative cooling, heat exchangers, etc.) to provide cooling in an energy efficient manner.

PDU(s) 306A-306F are configured to distribute electrical power from power source(s) 312, via UPS(s) 308, to equipment housed in rack(s) 112. In embodiments, PDU(s) 306A-306F ensure stable and/or reliable power supply to safeguard to equipment housed in rack(s) 112. In embodiments, pairs of PDU(s) 306A-306F are connected to UPS(s) 308.

UPS(s) 308 are configured to provide backup power and/or protect equipment housed in rack(s) 112 from disruptions in electrical power caused by power outages, voltage fluctuations, and/or electrical disturbances. In embodiments, UPS(s) 308 serve as an intermediary between the Power source(s) 312 and PDU(s) 306A-306F, ensuring a continuous power supply during unexpected interruptions and/or transitions to backup supplies (e.g., batteries, generators, etc.). In embodiments, UPS(s) 308 share a fraction of the total data center power load and are connected to a series of pairs of PDU(s) 306A-306F.

ATS 310 is configured to direct electrical power from power source(s) 312 to UPS(s) 308. In embodiments, ATS 310 is configured to automatically and/or seamlessly switch between power source(s) 312 based on various factors, such as, but not limited to, power availability and/or outage, equipment failure, costs, and/or the like.

Power source(s) 312 are configured to provide electrical power to data center 102 and/or components thereof, and may include, but are not limited to, a utility grid, a backup generator, a power storage solution (e.g., battery, fuel cell, etc.), a renewable energy source (e.g., solar panels, wind turbines, hydroelectric turbines, etc.), a nuclear power source, and/or the like.

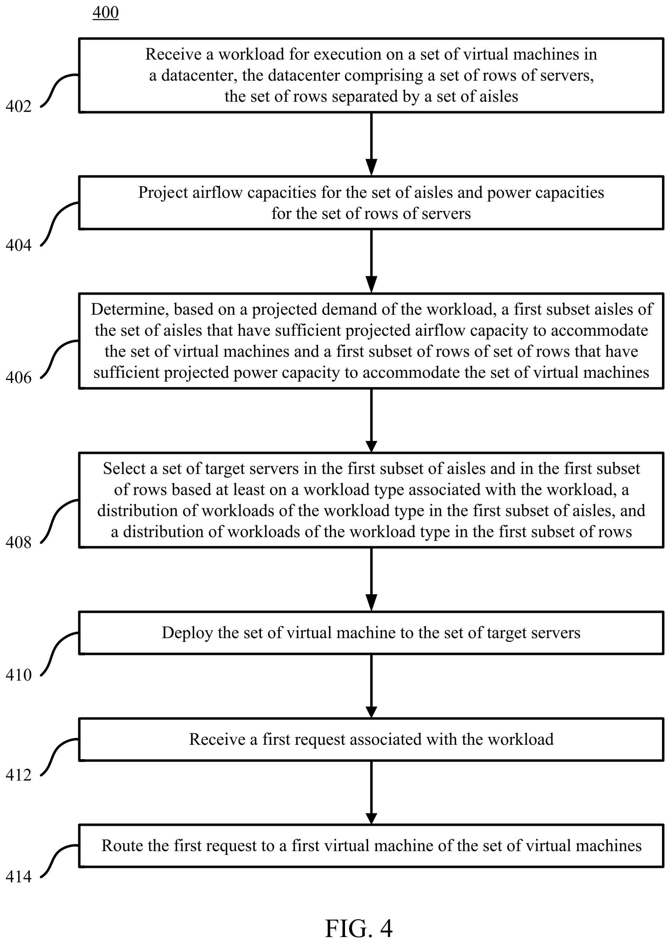

Embodiments described herein may operate in various ways to perform thermal and power aware VM placement in a data center. For instance, FIG. 4 depicts a flowchart 400 of a process thermal and power aware VM placement in a data center, in accordance with an embodiment. VM allocator 104, data center profile storage 106, server(s) 114, and/or sensor(s) 120 may, for example, operate according to flowchart 400. Flowchart 400 is described as follows with respect to FIGS. 1 and 2 for illustrative purposes.

Flowchart 400 starts at step 402. In step 402, a workload is received for execution on a set of VMs in a data center, the data center comprising a set of rows of servers, the set of rows separated by a set of aisles. For example, VM allocator 104 receives a workload 122 for execution on VMs in data center 102, such as, but not limited to, IaaS VM(s) 116 and/or SaaS VM(s) 118.

In step 404, airflow capacity and power capacity are estimated for the set of aisles and the set of rows, respectively. For example, VM allocator 104 estimates the airflow capacity and/or power capacity for cold aisle(s) 108 and/or row(s) 110, respectively

In step 406, a first subset of candidate aisles that have sufficient estimated airflow capacity to host the set of VMs and a first subset of candidate rows that have sufficient estimated power capacity to host the set of VMs are determined based on an estimated demand of the workload. For example, VM allocator 104 determines a subset of cold aisle(s) 108 and a subset of row(s) 110 that respectively have sufficient estimated thermal capacities and power capacities to host new VMs 128 associated with workload 122.

In step 408, a set of servers in the first subset of candidate aisles and in the first subset of candidate rows are selected based at least on a workload type associated with the workload, a distribution of the workload type in the subset of candidate aisles, and a distribution of the workload type in the subset of candidate rows. For example, VM allocator 104 selects, based at least on a workload type associated with the workload, a distribution of the workload type in the subset of candidate aisles, and a distribution of the workload type in the subset of candidate rows, a set of server(s) 114 that are in the subset of cold aisle(s) 108 and the subset of row(s) 110 that respectively have sufficient estimated thermal capacities and power capacities to host new VMs 128 associated with workload 122.

In step 410, the set of VMs are deployed to the set of servers. For example, VM allocator 104 deploys new VMs 128 associated with workload 122 to the set of server(s) 114. Once deployed, VMs 128 may process incoming requests associated with the workload. For instance, load balancer 202 routes incoming request 206 to SaaS VM(s) 118 associated with a SaaS workload.

In step 412, a first request associated with a workload is received. For example, load balancer 202 receives incoming request 206 associated with workload 122.

In step 414, the first request is routed to a first virtual machine of the set of virtual machines. For example, load balancer 202 routes incoming request 206 to a SaaS VM 118 executing on a server 114.

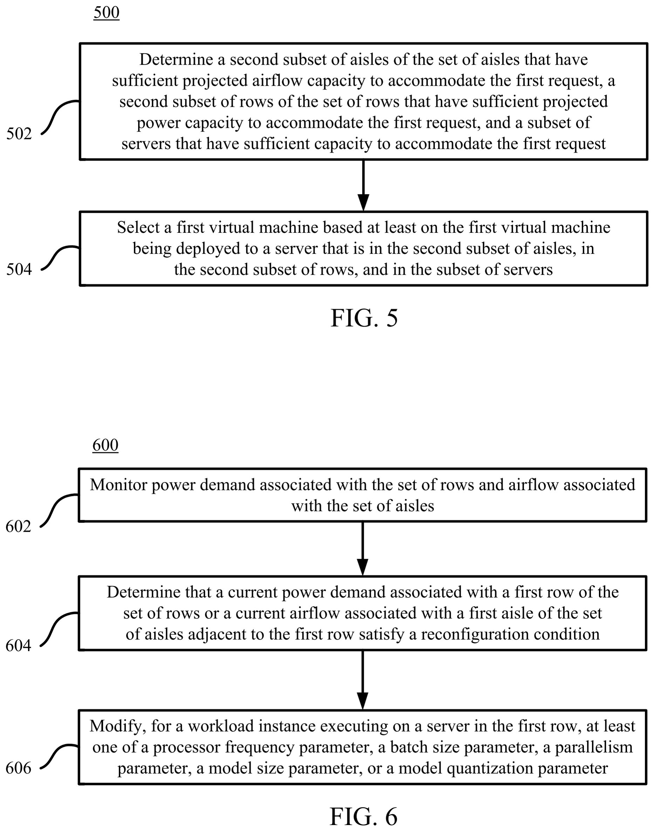

Embodiments described herein may operate in various ways to perform thermal and power aware request routing in a data center. For instance, FIG. 5 depicts a flowchart 500 of a process for thermal and power aware request routing in a data center, in accordance with an embodiment. Data center profile storage 106, server(s) 114, sensor(s) 120, and/or load balancer 202 may, for example, operate according to flowchart 500. Flowchart 500 is described as follows with respect to FIGS. 1 and 2 for illustrative purposes.

Flowchart 500 starts at step 502. In step 502, a second subset of aisles that have sufficient airflow capacity to process the first request, a second subset of rows that have sufficient power capacity to process the first request, and a subset of servers that have sufficient capacity to process the first request are determined. For example, load balancer 202 determines a subset of cold aisle(s) 108, a subset of row(s) 110, and a subset of server(s) 114 that respectively have sufficient airflow capacity, power capacity, and computing capacity to process incoming request 206. In embodiments, load balancer 202 determines whether cold aisle(s) 108, row(s) 110, and server(s) 114 have sufficient airflow, power, and computing, respectively, by estimating, based on historical profile(s) 126, the additional airflow, power, and computing demands associated with processing the first request on a server in aisle(s) 108, row(s) 110, and/or server(s) 114, and determining whether the additional airflow, power, and computing demands would cause aisle(s) 108, row(s) 110, and/or server(s) 114 to exceed thermal and/or power constraints (e.g., maximum airflow available, maximum power available, maximum temperature, etc.). In embodiments, the thermal and/or power constraints are determined based on the capabilities (e.g., CFM rating, power rating, operating temperature ranges, etc.) of the data center components (e.g., AHU(s) 304A-304C, PDU(s) 306A-306F, UPS(s) 308, ATS 310, power source(s) 312, server(s) 114, etc.).

In step 504, a first virtual machine of the set of virtual machines is selected based at least on the first virtual machine being deployed to a server that is in the second subset of aisles, in the second subset of rows, and in the subset of servers. For example, load balancer 202 selects a SaaS VM 118 executing on a server 114 that is in the determined subset of cold aisle(s) 108, in the determined subset of row(s) 110, and in the determined subset of server(s) 114, and route incoming request 206 to the selected SaaS VM 118. In embodiments, load balancer 202 routes incoming request 206 to a SaaS VM 118 hosted on server(s) 114 that have sufficient airflow, power, and/or computing capacities based on one or more load balancing policies, such as, but not limited to, routing incoming request 206 to SaaS VM(s) 118 that have previously handled requests from the same customer in order to maximize cache reuse, concentrating loads on server(s) 114 to reduce energy consumption, and/or distributing requests across SaaS VM(s) 118 to optimize performance (e.g., latency, throughput, etc.).

Embodiments described herein may operate in various ways to perform thermal and power aware workload instance reconfiguration in a data center. For instance, FIG. 6 depicts a flowchart 600 of a process for thermal and power aware workload instance reconfiguration in a data center, in accordance with an embodiment. Data center profile storage 106, server(s) 114, SaaS VM(s) 118, sensor(s) 120, and/or instance configurator 204 may, for example, operate according to flowchart 600. Flowchart 600 is described as follows with respect to FIGS. 1 and 2 for illustrative purposes.

Flowchart 600 starts at step 602. In step 602, power demand associated with a set of rows and airflow associated with a set of aisles are monitored. For example, VM allocator 104 monitors, via sensor(s) 120, power demand associated with row(s) 110 and airflow associated with cold aisle(s) 108.

In step 604, a current airflow demand or a current power demand associated with a first row of the set of rows or a current airflow demand associated with a first aisle of the set of aisles adjacent to the first row satisfy a reconfiguration condition. For example, instance configurator 204 determines, based on measurements 124 and/or historical profile(s) 126, that a current power demand associated with row(s) 110 or a current airflow demand associated with cold aisle(s) 108 satisfy a reconfiguration condition, such as, but not limited to, a current airflow demand associated with cold aisle(s) 108 exceeding a predetermined airflow demand threshold, a current power demand associated with row(s) 110 exceeding a predetermined power demand threshold, and/or the like.

In step 606, at least one of a processor frequency parameter, a batch size parameter, a parallelism parameter, a model size parameter, or a model quantization parameter for a workload instance executing on a server in the first row is modified. For example, instance configurator 204 modifies one or more adjustable configuration parameters associated with SaaS VM(s) 118 executing on server(s) 114 in row(s) 110, such as, but not limited to, a GPU frequency of a GPU executing the LLM instance, a model parallelism associated with the LLM instance, a batch size of the LLM instance, a model size of the LLM instance, and/or a model quantization of the LLM instance.

In embodiments, instance configurator 204 adjusts a GPU frequency of a GPU executing a SaaS workload instance in order to control the temperature and/or power consumption of the GPU. For example, instance configurator 204 reduces a GPU frequency of a GPU executing a SaaS workload instance in order to reduce the thermal and/or power demands associated with the SaaS workload instance when airflow, power, and/or thermal demands of a respective aisle, row, and/or server associated with the SaaS workload instance satisfies a respective airflow, power, and/or thermal condition (e.g., maximum airflow demand, maximum power demand, maximum temperature, etc.). In instances, instance configurator 204 increases a GPU frequency of a GPU executing a SaaS workload instance in order improve the performance (e.g., inference accuracy, etc.) of the workload (e.g., LLM inference workload) to satisfy service level agreements.

In embodiments, instance configurator 204 adjusts a model parallelism (e.g., Tensor parallelism) of a SaaS workload instance in order to control the thermal and/or power demands associated with the SaaS workload instance. For example, instance configurator 204 adjusts the number of GPUs that execute the SaaS workload instance in parallel to change the thermal and/or power demands associated with the SaaS workload instance. For example, reducing the number of GPUs executing a SaaS workload instance will reduce the power demand because less GPUs are employed, but it will also increase the thermal demand of the server because the same amount of work is concentrated on fewer GPUs, thereby resulting in an increase in the temperature of the hottest GPU in the server. In embodiments, instance configurator 204 adjusts a model parallelism of the SaaS workload instance based on the type of resource constraint being faced. For instance, when airflow and/or thermal demands are nearing airflow and/or thermal constraints, instance configurator 204 increases a model parallelism to spread the work across more GPUs to reduce the temperature of hottest GPU in the server, and when power demands are nearing power constraints, instance configurator 204 decreases a model parallelism to reduce the power demands associated with the SaaS workload instance.

In embodiments, instance configurator 204 adjusts a batch size of a SaaS workload instance in order to control the thermal and/or power demands associated with the SaaS workload instance. For example, the thermal and/or power demands associated with the SaaS workload instance vary based on the batch size and/or the inference phase associated with the SaaS workload instance. In embodiments, the thermal and/or power demands associated with the SaaS workloads are included in historical profile(s) 216. In embodiments, instance configurator 204 adjusts a batch size of the SaaS workload instance based on the type of resource constraint (e.g., thermal constraint, power constraint, airflow constraint, etc.) being faced and/or the inference phase (e.g., prefill phase, decode phase, etc.) the SaaS workload is executing. For instance, instance configurator 204 selects a batch size based on the thermal and/or power demands associated with the SaaS workloads are included in historical profile(s) 216 depending on the type of resource constraint (e.g., thermal constraint, power constraint, airflow constraint, etc.) being faced and/or the inference phase (e.g., prefill phase, decode phase, etc.) the SaaS workload is executing .

In embodiments, instance configurator 204 adjusts a model size associated with a SaaS workload instance in order to control the thermal and/or power demands associated with the SaaS workload instance. For example, instance configurator 204 reduces model size associated with a SaaS workload instance in order to reduce the thermal and/or power demands associated with the SaaS workload instance when airflow, power, and/or thermal demands of a respective aisle, row, and/or server associated with the SaaS workload instance satisfies a respective airflow, power, and/or thermal condition (e.g., maximum airflow demand, maximum power demand, maximum temperature, etc.). In instances, instance configurator 204 increases a model size associated with a SaaS workload instance in order improve the performance (e.g., inference accuracy, etc.) of the workload (e.g., LLM inference workload) to satisfy service level agreements.

In embodiments, instance configurator 204 adjusts a model quantization associated with a SaaS workload instance in order to control the thermal and/or power demands associated with the SaaS workload instance. For example, instance configurator 204 reduces model quantization associated with a SaaS workload instance in order to reduce the thermal and/or power demands associated with the SaaS workload instance when airflow, power, and/or thermal demands of a respective aisle, row, and/or server associated with the SaaS workload instance satisfies a respective airflow, power, and/or thermal condition (e.g., maximum airflow demand, maximum power demand, maximum temperature, etc.). In instances, instance configurator 204 increases a model quantization associated with a SaaS workload instance in order improve the performance (e.g., inference accuracy, etc.) of the workload (e.g., LLM inference workload) to satisfy service level agreements.

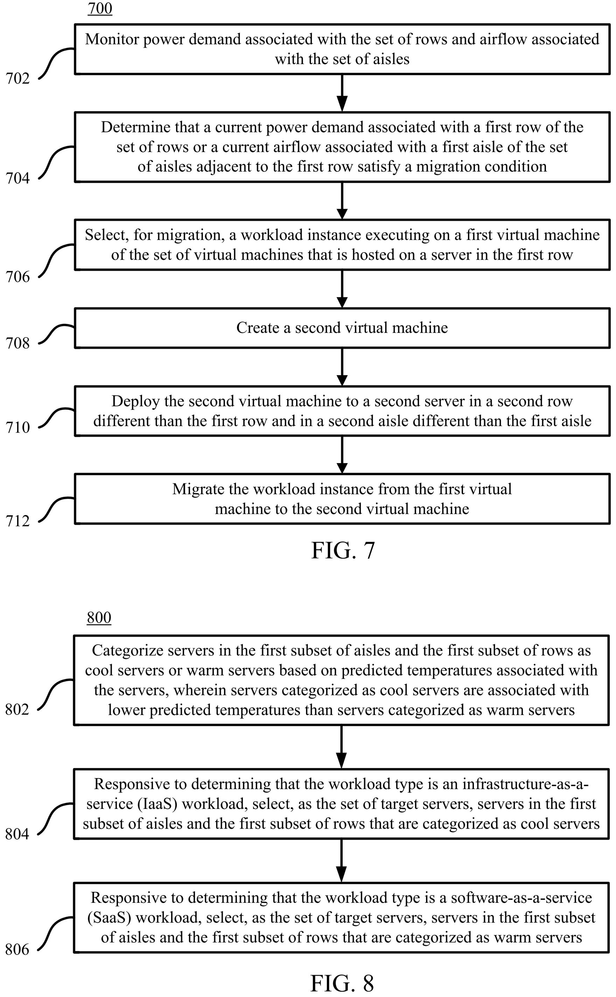

Embodiments described herein may operate in various ways to perform thermal and power aware workload instance migration. For instance, FIG. 7 depicts a flowchart 700 of a process for thermal and power aware workload instance migration, in accordance with an embodiment. VM allocator 104, data center profile storage 106, server(s) 114, and/or sensor(s) 120 may, for example, operate according to flowchart 700. Flowchart 700 is described as follows with respect to FIGS. 1 and 2 for illustrative purposes.

Flowchart 700 starts at step 702. In step 702, power demand associated with a set of rows and airflow associated with a set of aisles are monitored. For example, VM allocator 104 monitors, via sensor(s) 120, power demand associated with row(s) 110 and airflow associated with cold aisle(s) 108.

In step 704, a current airflow demand or a current power demand associated with a first row of the set of rows or a current airflow demand associated with a first aisle of the set of aisles adjacent to the first row satisfy a migration condition. For example, instance configurator 204 determines, based on measurements 124 and/or historical profile(s) 126, that a current power demand associated with row(s) 110 or a current airflow demand associated with cold aisle(s) 108 satisfy a migration condition, such as, but not limited to, a current airflow demand associated with cold aisle(s) 108 exceeding a predetermined airflow demand threshold, a current power demand associated with row(s) 110 exceeding a predetermined power demand threshold, and/or the like.

In step 706, a workload instance executing on a first VM of the set of VMs that is hosted on a server in the first row is selected for migration. For example, VM allocator 104 selects a SaaS VM 118 executing on a server 114 in a row 110 that satisfies the migration condition.

In step 708, a second VM is created. For example, VM allocator 104 creates a new VM 128.

In step 710, the second VM is deployed to a second server in a second row different than the first row and in a second aisle different from the first aisle. For example, VM allocator 104 deploys new VM 128 to an alternate server 114 associated with a different aisle or different row than the aisle or row that satisfy the migration condition.

In step 710, a workload is migrated from the first VM to the second VM. For example, VM allocator 104 migrates a workload instance from SaaS VM 118 executing on the first server 114 to the new VM 128 executing on the alternate server 114.

Embodiments described herein may operate in various ways to perform thermal and power aware VM placement in a data center. For instance, FIG. 8 depicts a flowchart 800 of a process thermal and power aware VM placement in a data center, in accordance with an embodiment. VM allocator 104, data center profile storage 106, server(s) 114, and/or sensor(s) 120 may, for example, operate according to flowchart 800. Note that not all steps of flowchart 800 need to be performed in all embodiments, and in some embodiments, the steps of flowchart 800 may be performed in different orders than shown. Flowchart 800 is described as follows with respect to FIGS. 1 and 2 for illustrative purposes.

Flowchart 800 starts at step 802. In step 802, servers in a first set of candidate aisles and a first set of candidate rows are categorized as cool servers or warm servers based on estimated temperatures associated with the servers, wherein servers categorized as cool servers are associated with lower estimated temperatures than servers categorized as warm servers. For example, VM allocator 104 categorizes server(s) 114 in a first set of candidate cold aisle(s) 108 and in a first set of candidate row(s) 110 as cool servers or warm servers based on estimated temperatures associated with the servers. In embodiments, VM allocator 104 estimates peak GPU temperatures for GPUs in server(s) 114 based on measurements 124, the historical profile(s) 126, and/or the estimated load of the new VMs 128 associated with workload 122, and categorizes a predetermined portion (e.g., number, percentage, etc.) of server(s) 114 having the lowest estimated peak GPU temperatures as cool servers and a predetermined portion (e.g., number, percentage, etc.) of server(s) 114 having the highest estimated peak GPU temperatures as warm servers.

In step 804, responsive to determining that a workload type is an IaaS workload, servers in a first set of candidate aisles and the first set of candidate rows that are categorized as cool servers are selected as a set of servers. For example, when workload 122 is an IaaS workload, VM allocator 104 deploys new VMs 128 associated with workload 122 to server(s) 114 that are categorized as cool servers.

In step 806, responsive to determining that a workload type is a SaaS workload, servers in a first set of candidate aisles and the first set of candidate rows that are categorized as warm servers are selected as a set of servers. For example, when workload 122 is an IaaS workload, VM allocator 104 deploys new VMs 128 associated with workload 122 to server(s) 114 that are categorized as warm servers.

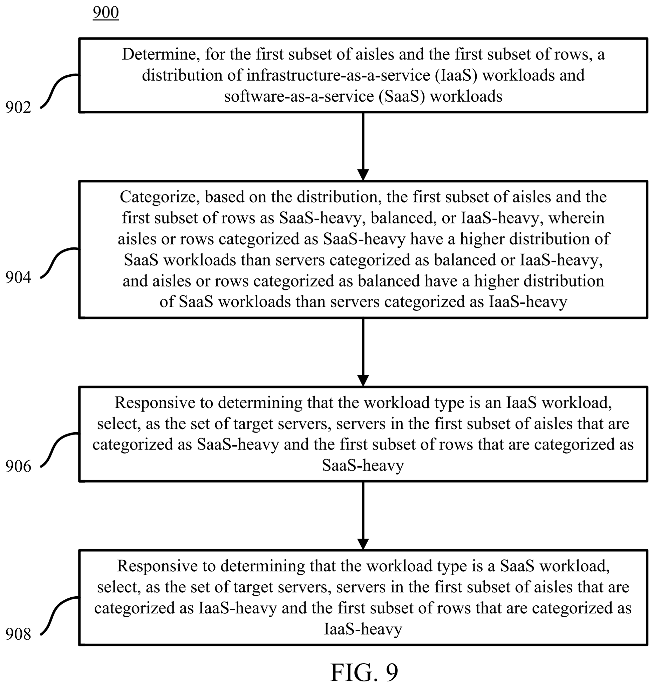

Embodiments described herein may operate in various ways to perform thermal and power aware VM placement in a data center. For instance, FIG. 9 depicts a flowchart 900 of a process for thermal and power aware VM placement in a data center, in accordance with an embodiment. VM allocator 104, data center profile storage 106, server(s) 114, and/or sensor(s) 120 may, for example, operate according to flowchart 900. Note that not all steps of flowchart 900 need to be performed in all embodiments, and in some embodiments, the steps of flowchart 900 may be performed in different orders than shown. Flowchart 900 is described as follows with respect to FIGS. 1 and 2 for illustrative purposes.

Flowchart 900 starts at step 902. In step 902, a distribution of IaaS workloads and SaaS workloads are determined for a first set of candidate aisles and a first set of candidate rows. For example, VM allocator 104 determines, for candidate cold aisle(s) 108 and candidate row(s) 110, a distribution or proportion of IaaS VM(s) 116 and/or SaaS VM(s) 118 executing on server(s) 114 associated with the candidate cold aisle(s) 108 and the candidate row(s) 110.

In step 904, the first set of candidate aisles and the first set of candidate rows are categorized as SaaS-heavy, balanced, or IaaS-heavy based on the distribution, wherein aisles or rows categorized as SaaS-heavy have a higher distribution of SaaS workloads than servers categorized as balanced or IaaS-heavy, and aisles or rows categorized as balanced have a higher distribution of SaaS workloads than servers categorized as IaaS-heavy. For example, VM allocator 104 initially categorizes cold aisle(s) 108 and row(s) 110 as balanced and deploys IaaS VM(s) 116 and/or SaaS VM(s) 118 to server(s) 114 based on other factors (e.g., temperature, etc.). As IaaS VM(s) 116 and/or SaaS VM(s) 118 are deployed to server(s) 114 in cold aisle(s) 108 and row(s) 110, the distribution of IaaS workloads and SaaS workloads in cold aisle(s) 108 and row(s) 110 is updated. In embodiments, VM allocator 104 categorizes a first set of candidate cold aisle(s) 108 and a first set of candidate row(s) 110 as IaaS-heavy, balanced, or SaaS-heavy based on the updated distribution. For example, VM allocator 104 categorizes a predetermined portion (e.g., number, percentage, etc.) of candidate cold aisle(s) 108 and/or candidate row(s) 110 having the highest proportion of IaaS VM(s) 116 as IaaS-heavy, a predetermined portion (e.g., number, percentage, etc.) of candidate cold aisle(s) 108 and/or candidate row(s) 110 having the lowest proportion of IaaS VM(s) 116 as SaaS-heavy, and the remainder of candidate cold aisle(s) 108 and/or candidate row(s) 110 as balanced.

In step 906, responsive to determining a workload type is an IaaS workload, servers in the first set of candidate aisles and the first set of candidate rows that are categorized as SaaS-heavy are selected as a set of servers. For example, when workload 122 is an IaaS workload, VM allocator 104 deploys new VMs 128 associated with workload 122 to server(s) 114 that are in the candidate cold aisle(s) 108 and the candidate row(s) 110 that are categorized as SaaS-heavy.

In step 908, responsive to determining a workload type is a SaaS workload, servers in the first set of candidate aisles and the first set of candidate rows that are categorized as IaaS-heavy are selected as a set of servers. For example, when workload 122 is a SaaS workload, VM allocator 104 deploys new VMs 128 associated with workload 122 to server(s) 114 that are in the candidate cold aisle(s) 108 and the candidate row(s) 110 that are categorized as IaaS-heavy.

### III. Example Mobile Device and Computer System Implementation

Data center 102, VM allocator 104, data center profile storage 106, rack(s) 112, server(s) 114, IaaS VM(s) 116, SaaS VM(s) 118, sensor(s) 120, load balancer 202, instance configurator 204, AHU(s) 304A-304C, PDU 306A-306F, UPS 308, ATS 310, power source(s) 312, and/or the steps of flowcharts 400, 500, 600, 700, 800, and/or 900 are implemented in hardware, or hardware combined with one or both of software and/or firmware. For example, VM allocator 104, data center profile storage 106, IaaS VM(s) 116, SaaS VM(s) 118, load balancer 202, instance configurator 204, and/or the components described therein, and/or the steps of flowcharts 400, 500, 600, 700, 800, and/or 900 are each implemented as computer program code/instructions configured to be executed in one or more processors and stored in a computer readable storage medium. Alternatively, data center 102, VM allocator 104, data center profile storage 106, rack(s) 112, server(s) 114, IaaS VM(s) 116, SaaS VM(s) 118, sensor(s) 120, load balancer 202, instance configurator 204, AHU(s) 304A-304C, PDU 306A-306F, UPS 308, ATS 310, power source(s) 312, and/or the components described therein, and/or the steps of flowcharts 400, 500, 600, 700, 800, and/or 900 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 10. FIG. 10 shows a block diagram of an exemplary computing environment 1000 that includes a computing device 1002. Computing device 1002 is an example of VM allocator 104, server(s) 114, and/or load balancer 202, which each include one or more of the components of computing device 1002. In some embodiments, computing device 1002 is communicatively coupled with devices (not shown in FIG. 10) external to computing environment 1000 via network 1004. Network 1004 comprises one or more networks such as local area networks (LANs), wide area networks (WANs), enterprise networks, the Internet, etc. In examples, network 1004 includes one or more wired and/or wireless portions. In some examples, network 1004 additionally or alternatively includes a cellular network for cellular communications. Computing device 1002 is described in detail as follows.

Computing device 1002 can be any of a variety of types of computing devices. Examples of computing device 1002 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 1002 is a stationary computing device such as a desktop computer, a personal computer (PC), a stationary server device, a minicomputer, a mainframe, a supercomputer, etc.

As shown in FIG. 10, computing device 1002 includes a variety of hardware and software components, including a processor 1010, a storage 1020, a graphics processing unit (GPU) 1042, a neural processing unit (NPU) 1044, one or more input devices 1030, one or more output devices 1050, one or more wireless modems 1060, one or more wired interfaces 1080, a power supply 1082, a location information (LI) receiver 1084, and an accelerometer 1086. Storage 1020 includes memory 1056, which includes non-removable memory 1022 and removable memory 1024, and a storage device 1088. Storage 1020 also stores an operating system 1012, application programs 1014, and application data 1016. Wireless modem(s) 1060 include a Wi-Fi modem 1062, a Bluetooth modem 1064, and a cellular modem 1066. Output device(s) 1050 includes a speaker 1052 and a display 1054. Input device(s) 1030 includes a touch screen 1032, a microphone 1034, a camera 1036, a physical keyboard 1038, and a trackball 1040. Not all components of computing device 1002 shown in FIG. 10 are present in all embodiments, additional components not shown may be present, and in a particular embodiment any combination of the components are present. In examples, components of computing device 1002 are mounted to a circuit card (e.g., a motherboard) of computing device 1002, integrated in a housing of computing device 1002, or otherwise included in computing device 1002. The components of computing device 1002 are described as follows.

In embodiments, a single processor 1010 (e.g., central processing unit (CPU), microcontroller, a microprocessor, signal processor, ASIC (application specific integrated circuit), and/or other physical hardware processor circuit) or multiple processors 1010 are present in computing device 1002 for performing such tasks as program execution, signal coding, data processing, input/output processing, power control, and/or other functions. In examples, processor 1010 is a single-core or multi-core processor, and each processor core is single-threaded or multithreaded (to provide multiple threads of execution concurrently). Processor 1010 is configured to execute program code stored in a computer readable medium, such as program code of operating system 1012 and application programs 1014 stored in storage 1020. The program code is structured to cause processor 1010 to perform operations, including the processes/methods disclosed herein. Operating system 1012 controls the allocation and usage of the components of computing device 1002 and provides support for one or more application programs 1014 (also referred to as "applications" or "apps"). In examples, application programs 1014 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 1010 includes one or more general processors (e.g., CPUs) configured with or coupled to one or more hardware accelerators, such as one or more NPUs 1044 and/or one or more GPUs 1042.

Any component in computing device 1002 can communicate with any other component according to function, although not all connections are shown for ease of illustration. For instance, as shown in FIG. 10, bus 1006 is a multiple signal line communication medium (e.g., conductive traces in silicon, metal traces along a motherboard, wires, etc.) present to communicatively couple processor 1010 to various other components of computing device 1002, although in other embodiments, an alternative bus, further buses, and/or one or more individual signal lines is/are present to communicatively couple components. Bus 1006 represents one or more of any of several types of bus structures, including a memory bus or memory controller, a peripheral bus, an accelerated graphics port, and a processor or local bus using any of a variety of bus architectures.

Storage 1020 is physical storage that includes one or both of memory 1056 and storage device 1088, which store operating system 1012, application programs 1014, and application data 1016 according to any distribution. Non-removable memory 1022 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 1022 includes main memory and is separate from or fabricated in a same integrated circuit as processor 1010. As shown in FIG. 10, non-removable memory 1022 stores firmware 1018 that is present to provide low-level control of hardware. Examples of firmware 1018 include BIOS (Basic Input/Output System, such as on personal computers) and boot firmware (e.g., on smart phones). In examples, removable memory 1024 is inserted into a receptacle of or is otherwise coupled to computing device 1002 and can be removed by a user from computing device 1002. Removable memory 1024 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 1088 are present that are internal and/or external to a housing of computing device 1002 and are or are not removable. Examples of storage device 1088 include a hard disk drive, an SSD, a thumb drive (e.g., a USB (Universal Serial Bus) flash drive), or other physical storage device.

One or more programs are stored in storage 1020. Such programs include operating system 1012, one or more application programs 1014, and other program modules and program data. Examples of such application programs include computer program logic (e.g., computer program code/instructions) for implementing VM allocator 104, data center profile 106, IaaS VM(s) 116, SaaS VM(s) 118, load balancer 202, instance configurator 204, and/or each of the components described therein, as well as any of flowcharts 400, 500, 600, 700, 800, 900, and/or any individual steps thereof.

Storage 1020 also stores data used and/or generated by operating system 1012 and application programs 1014 as application data 1016. Examples of application data 1016 include web pages, text, images, tables, sound files, video data, and other data. In examples, application data 1016 is sent to and/or received from one or more network servers or other devices via one or more wired or wireless networks. Storage 1020 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 1002 through one or more input devices 1030 and receives information from computing device 1002 through one or more output devices 1050. Input device(s) 1030 includes one or more of touch screen 1032, microphone 1034, camera 1036, physical keyboard 1038 and/or trackball 1040 and output device(s) 1050 includes one or more of speaker 1052 and display 1054. Each of input device(s) 1030 and output device(s) 1050 are integral to computing device 1002 (e.g., built into a housing of computing device 1002) or are external to computing device 1002 (e.g., communicatively coupled wired or wirelessly to computing device 1002 via wired interface(s) 1080 and/or wireless modem(s) 1060). Further input devices 1030 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 1054 displays information, as well as operating as touch screen 1032 by receiving user commands and/or other information (e.g., by touch, finger gestures, virtual keyboard, etc.) as a user interface. Any number of each type of input device(s) 1030 and output device(s) 1050 are present, including multiple microphones 1034, multiple cameras 1036, multiple speakers 1052, and/or multiple displays 1054.

In embodiments where GPU 1042 is present, GPU 1042 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 1042 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 1044 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 1028. In an example, NPU 1044 is configured for a data-driven parallel computing and is highly efficient at processing massive multimedia data such as videos and images and processing data for neural networks. NPU 1044 is configured for efficient handling of AI-related tasks, such as speech recognition, background blurring in video calls, photo or video editing processes like object detection, etc.

In embodiments disclosed herein that implement ML models, NPU 1044 can be utilized to execute such ML models, of which MLM 1028 is an example. For instance, where applicable, MLM 1028 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Implementations of LLMs include, but are not limited to, open-source LLMs (e.g., GPT, BERT, BLOOM, Gemma, LLaMA, etc.), and/or proprietary LLMs (e.g., PaLM, JARVIS, ChatGPT, etc.). Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 1044 is used to train MLM 1028. To train MLM 1028, training data is that includes input features (attributes) and their corresponding output labels/target values (e.g., for supervised learning) is collected. A training algorithm is a computational procedure that is used so that MLM 1028 learns from the training data. Parameters/weights are internal settings of MLM 1028 that are adjusted during training by the training algorithm to reduce a difference between predictions by MLM 1028 and actual outcomes (e.g., output labels). In some examples, MLM 1028 is set with initial values for the parameters/weights. A loss function measures a dissimilarity between predictions by MLM 1028 and the target values, and the parameters/weights of MLM 1028 are adjusted to minimize the loss function. The parameters/weights are iteratively adjusted by an optimization technique, such as gradient descent. In this manner, MLM 1028 is generated through training by NPU 1044 to be used to generate inferences based on received input feature sets for particular applications. MLM 1028 is generated as a computer program or other type of algorithm configured to generate an output (e.g., a classification, a prediction/inference) based on received input features, and is stored in the form of a file or other data structure.

In examples, such training of MLM 1028 by NPU 1044 is supervised or unsupervised. According to supervised learning, input objects (e.g., a vector of predictor variables) and a desired output value (e.g., a human-labeled supervisory signal) train MLM 1028. The training data is processed, building a function that maps new data on expected output values. Example algorithms usable by NPU 1044 to perform supervised training of MLM 1028 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 1028 is an LLM, MLM 1028 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 1028 is trained to learn patterns from unlabeled data. For instance, in embodiments where MLM 1028 implements unsupervised learning techniques, MLM 1028 identifies one or more classifications or clusters to which an input belongs. During a training phase of MLM 1028 according to unsupervised learning, MLM 1028 tries to mimic the provided training data and uses the error in its mimicked output to correct itself (i.e., correct weights and biases). In further examples, NPU 1044 perform unsupervised training of MLM 1028 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 1044 need not necessarily be present in all ML model embodiments. In embodiments where ML models are present, any one or more of processor 1010, GPU 1042, and/or NPU 1044 can be present to train and/or execute MLM 1028.

One or more wireless modems 1060 can be coupled to antenna(s) (not shown) of computing device 1002 and can support two-way communications between processor 1010 and devices external to computing device 1002 through network 1004, as would be understood to persons skilled in the relevant art(s). Wireless modem 1060 is shown generically and can include a cellular modem 1066 for communicating with one or more cellular networks, such as a GSM network for data and voice communications within a single cellular network, between cellular networks, or between the mobile device and a public switched telephone network (PSTN). In examples, wireless modem 1060 also or alternatively includes other radio-based modem types, such as a Bluetooth modem 1064 (also referred to as a "Bluetooth device") and/or Wi-Fi modem 1062 (also referred to as an "wireless adaptor"). Wi-Fi modem 1062 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 1064 is configured to communicate with another Bluetooth-capable device according to the Bluetooth short-range wireless technology standard(s) such as IEEE 802.15.1 and/or managed by the Bluetooth Special Interest Group (SIG).

Computing device 1002 can further include power supply 1082, LI receiver 1084, accelerometer 1086, and/or one or more wired interfaces 1080. Example wired interfaces 1080 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 1080 of computing device 1002 provide for wired connections between computing device 1002 and network 1004, or between computing device 1002 and one or more devices/peripherals when such devices/peripherals are external to computing device 1002 (e.g., a pointing device, display 1054, speaker 1052, camera 1036, physical keyboard 1038, etc.). Power supply 1082 is configured to supply power to each of the components of computing device 1002 and receives power from a battery internal to computing device 1002, and/or from a power cord plugged into a power port of computing device 1002 (e.g., a USB port, an A/C power port). LI receiver 1084 is useable for location determination of computing device 1002 and in examples includes a satellite navigation receiver such as a Global Positioning System (GPS) receiver and/or includes other type of location determiner configured to determine location of computing device 1002 based on received information (e.g., using cell tower triangulation, etc.). Accelerometer 1086, when present, is configured to determine an orientation of computing device 1002.

Note that the illustrated components of computing device 1002 are not required or all-inclusive, and fewer or greater numbers of components can be present as would be recognized by one skilled in the art. In examples, computing device 1002 includes one or more of a gyroscope, barometer, proximity sensor, ambient light sensor, digital compass, etc. In an example, processor 1010 and memory 1056 are co-located in a same semiconductor device package, such as being included together in an integrated circuit chip, FPGA, or system-on-chip (SOC), optionally along with further components of computing device 1002.

In embodiments, computing device 1002 is configured to implement any of the above-described features of flowcharts herein. Computer program logic for performing any of the operations, steps, and/or functions described herein is stored in storage 1020 and executed by processor 1010.

In some embodiments, server infrastructure 1070 is present in computing environment 1000 and is communicatively coupled with computing device 1002 via network 1004. Server infrastructure 1070, when present, is a network-accessible server set (e.g., a cloud-based environment or platform). As shown in FIG. 10, server infrastructure 1070 includes clusters 1072. Each of clusters 1072 comprises a group of one or more compute nodes and/or a group of one or more storage nodes. For example, as shown in FIG. 10, cluster 1072 includes nodes 1074. Each of nodes 1074 are accessible via network 1004 (e.g., in a "cloud-based" embodiment) to build, deploy, and manage applications and services. In examples, any of nodes 1074 is a storage node that comprises a plurality of physical storage disks, SSDs, and/or other physical storage devices that are accessible via network 1004 and are configured to store data associated with the applications and services managed by nodes 1074.

Each of nodes 1074, as a compute node, comprises one or more server computers, server systems, and/or computing devices. For instance, a node 1074 in accordance with an embodiment includes one or more of the components of computing device 1002 disclosed herein. Each of nodes 1074 is configured to execute one or more software applications (or "applications") and/or services and/or manage hardware resources (e.g., processors, memory, etc.), which are utilized by users (e.g., customers) of the network-accessible server set. In examples, as shown in FIG. 10, nodes 1074 includes a node 1046 that includes storage 1048 and/or one or more of a processor 1058 (e.g., similar to processor 1010, GPU 1042, and/or NPU 1044 of computing device 1002). Storage 1048 stores application programs 1076 and application data 1078. Processor(s) 1058 operate application programs 1076 which access and/or generate related application data 1078. In an implementation, nodes such as node 1046 of nodes 1074 operate or comprise one or more virtual machines, with each virtual machine emulating a system architecture (e.g., an operating system), in an isolated manner, upon which applications such as application programs 1076 are executed.

In embodiments, one or more of clusters 1072 are located/co-located (e.g., housed in one or more nearby buildings with associated components such as backup power supplies, redundant data communications, environmental controls, etc.) to form a data center, or are arranged in other manners. Accordingly, in an embodiment, one or more of clusters 1072 are included in a data center in a distributed collection of data centers. In embodiments, exemplary computing environment 1000 comprises part of a cloud-based platform.

In an embodiment, computing device 1002 accesses application programs 1076 for execution in any manner, such as by a client application and/or a browser at computing device 1002.

In an example, for purposes of network (e.g., cloud) backup and data security, computing device 1002 additionally and/or alternatively synchronizes copies of application programs 1014 and/or application data 1016 to be stored at network-based server infrastructure 1070 as application programs 1076 and/or application data 1078. In examples, operating system 1012 and/or application programs 1014 include a file hosting service client configured to synchronize applications and/or data stored in storage 1020 at network-based server infrastructure 1070.

In some embodiments, on-premises servers 1092 are present in computing environment 1000 and are communicatively coupled with computing device 1002 via network 1004. On-premises servers 1092, when present, are hosted within an organization's infrastructure and, in many cases, physically onsite of a facility of that organization. On-premises servers 1092 are controlled, administered, and maintained by IT (Information Technology) personnel of the organization or an IT partner to the organization. Application data 1098 can be shared by on-premises servers 1092 between computing devices of the organization, including computing device 1002 (when part of an organization) through a local network of the organization, and/or through further networks accessible to the organization (including the Internet). Furthermore, in examples, on-premises servers 1092 serve applications such as application programs 1096 to the computing devices of the organization, including computing device 1002. Accordingly, in examples, on-premises servers 1092 include storage 1094 (which includes one or more physical storage devices such as storage disks and/or SSDs) for storage of application programs 1096 and application data 1098 and include a processor 1090 (e.g., similar to processor 1010, GPU 1042, and/or NPU 1044 of computing device 1002) for execution of application programs 1096. In some embodiments, multiple processors 1090 are present for execution of application programs 1096 and/or for other purposes. In further examples, computing device 1002 is configured to synchronize copies of application programs 1014 and/or application data 1016 for backup storage at on-premises servers 1092 as application programs 1096 and/or application data 1098.

Embodiments described herein may be implemented in one or more of computing device 1002, network-based server infrastructure 1070, and on-premises servers 1092. For example, in some embodiments, computing device 1002 is used to implement systems, clients, or devices, or components/subcomponents thereof, disclosed elsewhere herein. In other embodiments, a combination of computing device 1002, network-based server infrastructure 1070, and/or on-premises servers 1092 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 1020. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 1014) are stored in storage 1020. Such computer programs can also be received via wired interface(s) 1060 and/or wireless modem(s) 1060 over network 1004. Such computer programs, when executed or loaded by an application, enable computing device 1002 to implement features of embodiments discussed herein. Accordingly, such computer programs represent controllers of the computing device 1002.

Embodiments are also directed to computer program products comprising computer code or instructions stored on any computer-readable medium or computer-readable storage medium. Such computer program products include the physical storage of storage 1020 as well as further physical storage types.

### IV. Additional Example Embodiments

In embodiments, a system comprises a processor; and a memory device comprising program code structured to cause the processor to: receive a workload for execution on a set of virtual machines in a data center, the data center comprising a set of rows of servers, the set of rows separated by a set of aisles; estimate airflow capacities for the set of aisles and power capacities for the set of rows of servers; determine, based on an estimated demand of the workload, a first subset aisles of the set of aisles that have sufficient estimated airflow capacity to host the set of virtual machines and a first subset of rows of set of rows that have sufficient estimated power capacity to host the set of virtual machines; select a set of servers in the first subset of aisles and in the first subset of rows based at least on a workload type associated with the workload, a distribution of workloads of the workload type in the first subset of aisles, and a distribution of workloads of the workload type in the first subset of rows; deploy the set of virtual machine to the set of servers; receive a first request associated with the workload; and route the first request to a first virtual machine of the set of virtual machines.

In embodiments, to route the first request, the program code is structured to cause the processor to: determine a second subset of aisles of the set of aisles that have sufficient estimated airflow capacity to process the first request, a second subset of rows of the set of rows that have sufficient estimated power capacity to process the first request, and a subset of servers that have sufficient capacity to process the first request; and select the first virtual machine based at least on the first virtual machine being deployed to a server that is in the second subset of aisles, in the second subset of rows, and in the subset of servers.

In embodiments, the program code is configured to cause the processor to route the first request to the first virtual machine responsive to at least one of: determining that the first virtual machine processed a previous request from a customer associated with the first request; determining that the first virtual machine currently processes other requests associated with the workload; or determining that routing the first request to the first virtual machine balances a distribution of requests associated with the workload across the set of virtual machines.

In embodiments, the program code is structured to further cause the processor to: monitor power demand associated with the set of rows and airflow associated with the set of aisles; determine that a current power demand associated with a first row of the set of rows or a current airflow demand associated with a first aisle of the set of aisles adjacent to the first row satisfy a reconfiguration condition; and modify, for a workload instance executing on a server in the first row, at least one of a processor frequency parameter, a batch size parameter, a parallelism parameter, a model size parameter, or a model quantization parameter.

In embodiments, to select the set of servers, the program code is structured to cause the processor to: categorize servers in the first subset of aisles and the first subset of rows as cool servers or warm servers based on estimated temperatures associated with the servers, wherein servers categorized as cool servers are associated with lower estimated temperatures than servers categorized as warm servers; responsive to determining that the workload type is an infrastructure-as-a-service (IaaS) workload, select, as the set of servers, servers in the first subset of aisles and the first subset of rows that are categorized as cool servers; and responsive to determining that the workload type is a software-as-a-service (SaaS) workload, select, as the set of servers, servers in the first subset of aisles and the first subset of rows that are categorized as warm servers.

In embodiments, to select the set of servers, the program code is structured to cause the processor to: determine, for the first subset of aisles and the first subset of rows, a distribution of infrastructure-as-a-service (IaaS) workloads and software-as-a-service (SaaS) workloads based on a number of IaaS workloads and a number of SaaS workloads deployed to the first subset of aisles and the first subset of rows; categorize, based on the distribution, the first subset of aisles and the first subset of rows as at least one of SaaS-heavy, balanced, or IaaS-heavy, wherein aisles or rows categorized as SaaS-heavy have a higher distribution of SaaS workloads than servers categorized as balanced or IaaS-heavy, and aisles or rows categorized as balanced have a higher distribution of SaaS workloads than servers categorized as IaaS-heavy; responsive to determining that the workload type is an IaaS workload, select, as the set of servers, servers in the first subset of aisles that are categorized as SaaS-heavy and the first subset of rows that are categorized as SaaS-heavy; and responsive to determining that the workload type is a SaaS workload, select, as the set of servers, servers in the first subset of aisles that are categorized as IaaS-heavy and the first subset of rows that are categorized as IaaS-heavy.

In embodiments, the program code is structured to further cause the processor to: monitor power demand associated with the set of rows and airflow associated with the set of aisles; determine that a current power demand associated with a first row of the set of rows or a current airflow demand associated with a first aisle of the set of aisles adjacent to the first row satisfy a migration condition; select, for migration, a workload instance executing on a first virtual machine of the set of virtual machines that is hosted on a server in the first row; create a second virtual machine; deploy the second virtual machine to a second server in a second row different than the first row and in a second aisle different than the first aisle; and migrate the workload instance from the first virtual machine to the second virtual machine.

In embodiments, a method comprises: receiving a workload for execution on a set of virtual machines in a data center, the data center comprising a set of rows of servers, the set of rows separated by a set of aisles; estimating airflow capacities for the set of aisles and power capacities for the set of rows of servers; determining, based on an estimated demand of the workload, a first subset aisles of the set of aisles that have sufficient estimated airflow capacity to host the set of virtual machines and a first subset of rows of set of rows that have sufficient estimated power capacity to host the set of virtual machines; selecting a set of servers in the first subset of aisles and in the first subset of rows based at least on a workload type associated with the workload, a distribution of workloads of the workload type in the first subset of aisles, and a distribution of workloads of the workload type in the first subset of rows; deploying the set of virtual machine to the set of servers; receiving a first request associated with the workload; and routing the first request to a first virtual machine of the set of virtual machines.

In embodiments, routing the first request comprises: determining a second subset of aisles of the set of aisles that have sufficient estimated airflow capacity to process the first request, a second subset of rows of the set of rows that have sufficient estimated power capacity to process the first request, and a subset of servers that have sufficient capacity to process the first request; and selecting the first virtual machine based at least on the first virtual machine being deployed to a server that is in the second subset of aisles, in the second subset of rows, and in the subset of servers.

In embodiments, routing the first request to the first virtual machine is performed responsive to at least one of: determining that the first virtual machine processed a previous request from a customer associated with the first request; determining that the first virtual machine currently processes other requests associated with the workload; or determining that routing the first request to the first virtual machine balances a distribution of requests associated with the workload across the set of virtual machines.

In embodiments, the method further comprises: monitoring power demand associated with the set of rows and airflow associated with the set of aisles; determining that a current power demand associated with a first row of the set of rows or a current airflow demand associated with a first aisle of the set of aisles adjacent to the first row satisfy a reconfiguration condition; and modifying, for a workload instance executing on a server in the first row, at least one of a processor frequency parameter, a batch size parameter, a parallelism parameter, a model size parameter, or a model quantization parameter.

In embodiments, selecting a set of servers comprises: categorizing servers in the first subset of aisles and the first subset of rows as cool servers or warm servers based on estimated temperatures associated with the servers, wherein servers categorized as cool servers are associated with lower estimated temperatures than servers categorized as warm servers; responsive to determining that the workload type is an infrastructure-as-a-service (IaaS) workload, selecting, as the set of servers, servers in the first subset of aisles and the first subset of rows that are categorized as cool servers; and responsive to determining that the workload type is a software-as-a-service (SaaS) workload, selecting, as the set of servers, servers in the first subset of aisles and the first subset of rows that are categorized as warm servers.

In embodiments, selecting a set of servers comprises: determining, for the first subset of aisles and the first subset of rows, a distribution of infrastructure-as-a-service (IaaS) workloads and software-as-a-service (SaaS) workloads based on a number of IaaS workloads and a number of SaaS workloads deployed to the first subset of aisles and the first subset of rows; categorizing, based on the distribution, the first subset of aisles and the first subset of rows as at least one of SaaS-heavy, balanced, or IaaS-heavy, wherein aisles or rows categorized as SaaS-heavy have a higher distribution of SaaS workloads than servers categorized as balanced or IaaS-heavy, and aisles or rows categorized as balanced have a higher distribution of SaaS workloads than servers categorized as IaaS-heavy; responsive to determining that the workload type is an IaaS workload, selecting, as the set of servers, servers in the first subset of aisles that are categorized as SaaS-heavy and the first subset of rows that are categorized as SaaS-heavy; and responsive to determining that the workload type is a SaaS workload, selecting, as the set of servers, servers in the first subset of aisles that are categorized as IaaS-heavy and the first subset of rows that are categorized as IaaS-heavy.

In embodiments, the method further comprises: monitoring power demand associated with the set of rows and airflow associated with the set of aisles; determining that a current power demand associated with a first row of the set of rows or a current airflow demand associated with a first aisle of the set of aisles adjacent to the first row satisfy a migration condition; selecting, for migration, a workload instance executing on a first virtual machine of the set of virtual machines that is hosted on a server in the first row; creating a second virtual machine; deploying the second virtual machine to a second server in a second row different than the first row and in a second aisle different than the first aisle; and migrating the workload instance from the first virtual machine to the second virtual machine.

In embodiments, a computer-readable storage medium comprises executable instructions that are executed by a processor to cause the processor to: receive a workload for execution on a set of virtual machines in a data center, the data center comprising a set of rows of servers, the set of rows separated by a set of aisles; estimate airflow capacities for the set of aisles and power capacities for the set of rows of servers; determine, based on an estimated demand of the workload, a first subset aisles of the set of aisles that have sufficient estimated airflow capacity to host the set of virtual machines and a first subset of rows of set of rows that have sufficient estimated power capacity to host the set of virtual machines; select a set of servers in the first subset of aisles and in the first subset of rows based at least on a workload type associated with the workload, a distribution of workloads of the workload type in the first subset of aisles, and a distribution of workloads of the workload type in the first subset of rows; deploy the set of virtual machine to the set of servers; receive a first request associated with the workload; and route the first request to a first virtual machine of the set of virtual machines.

In embodiments, to route the first request, the executable instructions are executed by the processor to cause the processor to: determine a second subset of aisles of the set of aisles that have sufficient estimated airflow capacity to process the first request, a second subset of rows of the set of rows that have sufficient estimated power capacity to process the first request, and a subset of servers that have sufficient capacity to process the first request; and select the first virtual machine based at least on the first virtual machine being deployed to a server that is in the second subset of aisles, in the second subset of rows, and in the subset of servers.

In embodiments, the executable instructions are executed by the processor to further cause the processor to route the first request to the first virtual machine responsive to at least one of: determining that the first virtual machine processed a previous request from a customer associated with the first request; determining that the first virtual machine currently processes other requests associated with the workload; or determining that routing the first request to the first virtual machine balances a distribution of requests associated with the workload across the set of virtual machines.

In embodiments, the executable instructions are executed by the processor to further cause the processor to: monitor power demand associated with the set of rows and airflow associated with the set of aisles; determine that a current power demand associated with a first row of the set of rows or a current airflow demand associated with a first aisle of the set of aisles adjacent to the first row satisfy a reconfiguration condition; and modify, for a workload instance executing on a server in the first row, at least one of a processor frequency parameter, a batch size parameter, a parallelism parameter, a model size parameter, or a model quantization parameter.

In embodiments, to select the set of servers, the executable instructions are executed by the processor to cause the processor to: categorize servers in the first subset of aisles and the first subset of rows as cool servers or warm servers based on estimated temperatures associated with the servers, wherein servers categorized as cool servers are associated with lower estimated temperatures than servers categorized as warm servers; responsive to determining that the workload type is an infrastructure-as-a-service (IaaS) workload, select, as the set of servers, servers in the first subset of aisles and the first subset of rows that are categorized as cool servers; and responsive to determining that the workload type is a software-as-a-service (SaaS) workload, select, as the set of servers, servers in the first subset of aisles and the first subset of rows that are categorized as warm servers.

In embodiments, to select the set of servers, the executable instructions are executed by the processor to cause the processor to: determine, for the first subset of aisles and the first subset of rows, a distribution of infrastructure-as-a-service (IaaS) workloads and software-as-a-service (SaaS) workloads based on a number of IaaS workloads and a number of SaaS workloads deployed to the first subset of aisles and the first subset of rows; categorize, based on the distribution, the first subset of aisles and the first subset of rows as at least one of SaaS-heavy, balanced, or IaaS-heavy, wherein aisles or rows categorized as SaaS-heavy have a higher distribution of SaaS workloads than servers categorized as balanced or IaaS-heavy, and aisles or rows categorized as balanced have a higher distribution of SaaS workloads than servers categorized as IaaS-heavy; responsive to determining that the workload type is an IaaS workload, select, as the set of servers, servers in the first subset of aisles that are categorized as SaaS-heavy and the first subset of rows that are categorized as SaaS-heavy; and responsive to determining that the workload type is a SaaS workload, select, as the set of servers, servers in the first subset of aisles that are categorized as IaaS-heavy and the first subset of rows that are categorized as IaaS-heavy.

### V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

While various embodiments of the present disclosure have been described above, it should be understood that they have been presented by way of example only, and not limitation. It will be understood by those skilled in the relevant art(s) that various changes in form and details may be made therein without departing from the spirit and scope of the invention as defined in the appended claims. Accordingly, the breadth and scope of the present invention should not be limited by any of the above-described exemplary embodiments, but should be defined only in accordance with the following claims and their equivalents.

**The following is a list of further preferred embodiments of the invention:**
Embodiment 1. A system comprising:
   a processor; and
   a memory device comprising program code structured to cause the processor to:
      receive a workload for execution on a set of virtual machines in a data center, the data center comprising a set of rows of servers, the set of rows separated by a set of aisles;
      estimate airflow capacities for the set of aisles and power capacities for the set of rows of servers;
      determine, based on an estimated demand of the workload, a first subset aisles of the set of aisles that have sufficient estimated airflow capacity to host the set of virtual machines and a first subset of rows of set of rows that have sufficient estimated power capacity to host the set of virtual machines;
      select a set of servers in the first subset of aisles and in the first subset of rows based at least on a workload type associated with the workload, a distribution of workloads of the workload type in the first subset of aisles, and a distribution of workloads of the workload type in the first subset of rows;
      deploy the set of virtual machine to the set of servers;
      receive a first request associated with the workload; and
      route the first request to a first virtual machine of the set of virtual machines.
Embodiment 2. The system of embodiment 1, wherein, to route the first request, the program code is structured to cause the processor to:
   determine a second subset of aisles of the set of aisles that have sufficient estimated airflow capacity to process the first request, a second subset of rows of the set of rows that have sufficient estimated power capacity to process the first request, and a subset of servers that have sufficient capacity to process the first request; and
   select the first virtual machine based at least on the first virtual machine being deployed to a server that is in the second subset of aisles, in the second subset of rows, and in the subset of servers.
Embodiment 3. The system of embodiment 2, wherein the program code is configured to cause the processor to route the first request to the first virtual machine responsive to at least one of:
   determining that the first virtual machine processed a previous request from a customer associated with the first request;
   determining that the first virtual machine currently processes other requests associated with the workload; or
   determining that routing the first request to the first virtual machine balances a distribution of requests associated with the workload across the set of virtual machines.
Embodiment 4. The system of embodiment 1, wherein the program code is structured to further cause the processor to:
   monitor power demand associated with the set of rows and airflow associated with the set of aisles;
   determine that a current power demand associated with a first row of the set of rows or a current airflow demand associated with a first aisle of the set of aisles adjacent to the first row satisfy a reconfiguration condition; and
   modify, for a workload instance executing on a server in the first row, at least one of a processor frequency parameter, a batch size parameter, a parallelism parameter, a model size parameter, or a model quantization parameter.
Embodiment 5. The system of embodiment 1, wherein, to select the set of servers, the program code is structured to cause the processor to:
   categorize servers in the first subset of aisles and the first subset of rows as cool servers or warm servers based on estimated temperatures associated with the servers, wherein servers categorized as cool servers are associated with lower estimated temperatures than servers categorized as warm servers;
   responsive to determining that the workload type is an infrastructure-as-a-service (IaaS) workload, select, as the set of servers, servers in the first subset of aisles and the first subset of rows that are categorized as cool servers; and
   responsive to determining that the workload type is a software-as-a-service (SaaS) workload, select, as the set of servers, servers in the first subset of aisles and the first subset of rows that are categorized as warm servers.
Embodiment 6. The system of embodiment 1, wherein, to select the set of servers, the program code is structured to cause the processor to:
   determine, for the first subset of aisles and the first subset of rows, a distribution of infrastructure-as-a-service (IaaS) workloads and software-as-a-service (SaaS) workloads based on a number of IaaS workloads and a number of SaaS workloads deployed to the first subset of aisles and the first subset of rows;
   categorize, based on the distribution, the first subset of aisles and the first subset of rows as at least one of SaaS-heavy, balanced, or IaaS-heavy, wherein aisles or rows categorized as SaaS-heavy have a higher distribution of SaaS workloads than servers categorized as balanced or IaaS-heavy, and aisles or rows categorized as balanced have a higher distribution of SaaS workloads than servers categorized as IaaS-heavy;
   responsive to determining that the workload type is an IaaS workload, select, as the set of servers, servers in the first subset of aisles that are categorized as SaaS-heavy and the first subset of rows that are categorized as SaaS-heavy; and
   responsive to determining that the workload type is a SaaS workload, select, as the set of servers, servers in the first subset of aisles that are categorized as IaaS-heavy and the first subset of rows that are categorized as IaaS-heavy.
Embodiment 7. The system of embodiment 1, wherein the program code is structured to further cause the processor to:
   monitor power demand associated with the set of rows and airflow associated with the set of aisles;
   determine that a current power demand associated with a first row of the set of rows or a current airflow demand associated with a first aisle of the set of aisles adjacent to the first row satisfy a migration condition;
   select, for migration, a workload instance executing on a first virtual machine of the set of virtual machines that is hosted on a server in the first row;
   create a second virtual machine;
   deploy the second virtual machine to a second server in a second row different than the first row and in a second aisle different than the first aisle; and
   migrate the workload instance from the first virtual machine to the second virtual machine.
Embodiment 8. A method comprising:
   receiving a workload for execution on a set of virtual machines in a data center, the data center comprising a set of rows of servers, the set of rows separated by a set of aisles;
   estimating airflow capacities for the set of aisles and power capacities for the set of rows of servers;
   determining, based on an estimated demand of the workload, a first subset aisles of the set of aisles that have sufficient estimated airflow capacity to host the set of virtual machines and a first subset of rows of set of rows that have sufficient estimated power capacity to host the set of virtual machines;
   selecting a set of servers in the first subset of aisles and in the first subset of rows based at least on a workload type associated with the workload, a distribution of workloads of the workload type in the first subset of aisles, and a distribution of workloads of the workload type in the first subset of rows;
   deploying the set of virtual machine to the set of servers;
   receiving a first request associated with the workload; and
   routing the first request to a first virtual machine of the set of virtual machines.
Embodiment 9. The method of embodiment 8, wherein said routing the first request comprises:
   determining a second subset of aisles of the set of aisles that have sufficient estimated airflow capacity to process the first request, a second subset of rows of the set of rows that have sufficient estimated power capacity to process the first request, and a subset of servers that have sufficient capacity to process the first request; and
   selecting the first virtual machine based at least on the first virtual machine being deployed to a server that is in the second subset of aisles, in the second subset of rows, and in the subset of servers.
Embodiment 10. The method of embodiment 9, wherein said routing the first request to the first virtual machine is performed responsive to at least one of:
   determining that the first virtual machine processed a previous request from a customer associated with the first request;
   determining that the first virtual machine currently processes other requests associated with the workload; or
   determining that routing the first request to the first virtual machine balances a distribution of requests associated with the workload across the set of virtual machines.
Embodiment 11. The method of embodiment 8, further comprising:
   monitoring power demand associated with the set of rows and airflow associated with the set of aisles;
   determining that a current power demand associated with a first row of the set of rows or a current airflow demand associated with a first aisle of the set of aisles adjacent to the first row satisfy a reconfiguration condition; and
   modifying, for a workload instance executing on a server in the first row, at least one of a processor frequency parameter, a batch size parameter, a parallelism parameter, a model size parameter, or a model quantization parameter.
Embodiment 12. The method of embodiment 8, wherein said selecting a set of servers comprises:
   categorizing servers in the first subset of aisles and the first subset of rows as cool servers or warm servers based on estimated temperatures associated with the servers, wherein servers categorized as cool servers are associated with lower estimated temperatures than servers categorized as warm servers;
   responsive to determining that the workload type is an infrastructure-as-a-service (IaaS) workload, selecting, as the set of servers, servers in the first subset of aisles and the first subset of rows that are categorized as cool servers; and
   responsive to determining that the workload type is a software-as-a-service (SaaS) workload, selecting, as the set of servers, servers in the first subset of aisles and the first subset of rows that are categorized as warm servers.
Embodiment 13. The method of embodiment 8, wherein said selecting a set of servers comprises:
   determining, for the first subset of aisles and the first subset of rows, a distribution of infrastructure-as-a-service (IaaS) workloads and software-as-a-service (SaaS) workloads based on a number of IaaS workloads and a number of SaaS workloads deployed to the first subset of aisles and the first subset of rows;
   categorizing, based on the distribution, the first subset of aisles and the first subset of rows as at least one of SaaS-heavy, balanced, or IaaS-heavy, wherein aisles or rows categorized as SaaS-heavy have a higher distribution of SaaS workloads than servers categorized as balanced or IaaS-heavy, and aisles or rows categorized as balanced have a higher distribution of SaaS workloads than servers categorized as IaaS-heavy;
   responsive to determining that the workload type is an IaaS workload, selecting, as the set of servers, servers in the first subset of aisles that are categorized as SaaS-heavy and the first subset of rows that are categorized as SaaS-heavy; and
   responsive to determining that the workload type is a SaaS workload, selecting, as the set of servers, servers in the first subset of aisles that are categorized as IaaS-heavy and the first subset of rows that are categorized as IaaS-heavy.
Embodiment 14. The method of embodiment 8, further comprising:
   monitoring power demand associated with the set of rows and airflow associated with the set of aisles;
   determining that a current power demand associated with a first row of the set of rows or a current airflow demand associated with a first aisle of the set of aisles adjacent to the first row satisfy a migration condition;
   selecting, for migration, a workload instance executing on a first virtual machine of the set of virtual machines that is hosted on a server in the first row;
   creating a second virtual machine;
   deploying the second virtual machine to a second server in a second row different than the first row and in a second aisle different than the first aisle; and
   migrating the workload instance from the first virtual machine to the second virtual machine.
Embodiment 15. A computer-readable storage medium comprising executable instructions that are executed by a processor to cause the processor to:
   receive a workload for execution on a set of virtual machines in a data center, the data center comprising a set of rows of servers, the set of rows separated by a set of aisles;
   estimate airflow capacities for the set of aisles and power capacities for the set of rows of servers;
   determine, based on an estimated demand of the workload, a first subset aisles of the set of aisles that have sufficient estimated airflow capacity to host the set of virtual machines and a first subset of rows of set of rows that have sufficient estimated power capacity to host the set of virtual machines;
   select a set of servers in the first subset of aisles and in the first subset of rows based at least on a workload type associated with the workload, a distribution of workloads of the workload type in the first subset of aisles, and a distribution of workloads of the workload type in the first subset of rows;
   deploy the set of virtual machine to the set of servers;
   receive a first request associated with the workload; and
   route the first request to a first virtual machine of the set of virtual machines.
Embodiment 16. The computer-readable storage medium of embodiment 15, wherein the executable instructions are executed by the processor to further cause the processor to:
   determine a second subset of aisles of the set of aisles that have sufficient estimated airflow capacity to process the first request, a second subset of rows of the set of rows that have sufficient estimated power capacity to process the first request, and a subset of servers that have sufficient capacity to process the first request; and
   select the first virtual machine based at least on the first virtual machine being deployed to a server that is in the second subset of aisles, in the second subset of rows, and in the subset of servers.
Embodiment 17. The computer-readable storage medium of embodiment 16, wherein the executable instructions are executed by the processor to further cause the processor to route the first request to the first virtual machine responsive to at least one of:
   determining that the first virtual machine processed a previous request from a customer associated with the first request;
   determining that the first virtual machine currently processes other requests associated with the workload; or
   determining that routing the first request to the first virtual machine balances a distribution of requests associated with the workload across the set of virtual machines.
Embodiment 18. The computer-readable storage medium of embodiment 15, wherein the executable instructions are executed by the processor to further cause the processor to:
   monitor power demand associated with the set of rows and airflow associated with the set of aisles;
   determine that a current power demand associated with a first row of the set of rows or a current airflow demand associated with a first aisle of the set of aisles adjacent to the first row satisfy a reconfiguration condition; and
   modify, for a workload instance executing on a server in the first row, at least one of a processor frequency parameter, a batch size parameter, a parallelism parameter, a model size parameter, or a model quantization parameter.
Embodiment 19. The computer-readable storage medium of embodiment 15, wherein, to select the set of servers, the executable instructions are executed by the processor to cause the processor to:
   categorize servers in the first subset of aisles and the first subset of rows as cool servers or warm servers based on estimated temperatures associated with the servers, wherein servers categorized as cool servers are associated with lower estimated temperatures than servers categorized as warm servers;
   responsive to determining that the workload type is an infrastructure-as-a-service (IaaS) workload, select, as the set of servers, servers in the first subset of aisles and the first subset of rows that are categorized as cool servers; and
   responsive to determining that the workload type is a software-as-a-service (SaaS) workload, select, as the set of servers, servers in the first subset of aisles and the first subset of rows that are categorized as warm servers.
Embodiment 20. The computer-readable storage medium of embodiment 15, wherein, to select the set of servers, the executable instructions are executed by the processor to cause the processor to:
   determine, for the first subset of aisles and the first subset of rows, a distribution of infrastructure-as-a-service (IaaS) workloads and software-as-a-service (SaaS) workloads based on a number of IaaS workloads and a number of SaaS workloads deployed to the first subset of aisles and the first subset of rows;
   categorize, based on the distribution, the first subset of aisles and the first subset of rows as at least one of SaaS-heavy, balanced, or IaaS-heavy, wherein aisles or rows categorized as SaaS-heavy have a higher distribution of SaaS workloads than servers categorized as balanced or IaaS-heavy, and aisles or rows categorized as balanced have a higher distribution of SaaS workloads than servers categorized as IaaS-heavy;
   responsive to determining that the workload type is an IaaS workload, select, as the set of servers, servers in the first subset of aisles that are categorized as SaaS-heavy and the first subset of rows that are categorized as SaaS-heavy; and
   responsive to determining that the workload type is a SaaS workload, select, as the set of servers, servers in the first subset of aisles that are categorized as IaaS-heavy and the first subset of rows that are categorized as IaaS-heavy.

## Claims

1. A system comprising:
a processor; and
a memory device comprising program code structured to cause the processor to:
receive a workload for execution on a set of virtual machines in a data center, the data center comprising a set of rows of servers, the set of rows separated by a set of aisles;
estimate airflow capacities for the set of aisles and power capacities for the set of rows of servers;
determine, based on an estimated demand of the workload, a first subset aisles of the set of aisles that have sufficient estimated airflow capacity to host the set of virtual machines and a first subset of rows of set of rows that have sufficient estimated power capacity to host the set of virtual machines;
select a set of servers in the first subset of aisles and in the first subset of rows based at least on a workload type associated with the workload, a distribution of workloads of the workload type in the first subset of aisles, and a distribution of workloads of the workload type in the first subset of rows;
deploy the set of virtual machine to the set of servers;
receive a first request associated with the workload; and
route the first request to a first virtual machine of the set of virtual machines.

2. The system of claim 1, wherein, to route the first request, the program code is structured to cause the processor to:
determine a second subset of aisles of the set of aisles that have sufficient estimated airflow capacity to process the first request, a second subset of rows of the set of rows that have sufficient estimated power capacity to process the first request, and a subset of servers that have sufficient capacity to process the first request; and
select the first virtual machine based at least on the first virtual machine being deployed to a server that is in the second subset of aisles, in the second subset of rows, and in the subset of servers.

3. The system of claim 2, wherein the program code is configured to cause the processor to route the first request to the first virtual machine responsive to at least one of:
determining that the first virtual machine processed a previous request from a customer associated with the first request;
determining that the first virtual machine currently processes other requests associated with the workload; or
determining that routing the first request to the first virtual machine balances a distribution of requests associated with the workload across the set of virtual machines.

4. The system of one of claims 1 to 3, wherein the program code is structured to further cause the processor to:
monitor power demand associated with the set of rows and airflow associated with the set of aisles;
determine that a current power demand associated with a first row of the set of rows or a current airflow demand associated with a first aisle of the set of aisles adjacent to the first row satisfy a reconfiguration condition; and
modify, for a workload instance executing on a server in the first row, at least one of a processor frequency parameter, a batch size parameter, a parallelism parameter, a model size parameter, or a model quantization parameter.

5. The system of one of claims 1 to 4, wherein, to select the set of servers, the program code is structured to cause the processor to:
categorize servers in the first subset of aisles and the first subset of rows as cool servers or warm servers based on estimated temperatures associated with the servers, wherein servers categorized as cool servers are associated with lower estimated temperatures than servers categorized as warm servers;
responsive to determining that the workload type is an infrastructure-as-a-service (laaS) workload, select, as the set of servers, servers in the first subset of aisles and the first subset of rows that are categorized as cool servers; and
responsive to determining that the workload type is a software-as-a-service (SaaS) workload, select, as the set of servers, servers in the first subset of aisles and the first subset of rows that are categorized as warm servers.

6. The system of one of claims 1 to 5, wherein, to select the set of servers, the program code is structured to cause the processor to:
determine, for the first subset of aisles and the first subset of rows, a distribution of infrastructure-as-a-service (laaS) workloads and software-as-a-service (SaaS) workloads based on a number of laaS workloads and a number of SaaS workloads deployed to the first subset of aisles and the first subset of rows;
categorize, based on the distribution, the first subset of aisles and the first subset of rows as at least one of SaaS-heavy, balanced, or IaaS-heavy, wherein aisles or rows categorized as SaaS-heavy have a higher distribution of SaaS workloads than servers categorized as balanced or IaaS-heavy, and aisles or rows categorized as balanced have a higher distribution of SaaS workloads than servers categorized as IaaS-heavy;
responsive to determining that the workload type is an laaS workload, select, as the set of servers, servers in the first subset of aisles that are categorized as SaaS-heavy and the first subset of rows that are categorized as SaaS-heavy; and
responsive to determining that the workload type is a SaaS workload, select, as the set of servers, servers in the first subset of aisles that are categorized as laaS-heavy and the first subset of rows that are categorized as IaaS-heavy.

7. The system of one of claims 1 to 6, wherein the program code is structured to further cause the processor to:
monitor power demand associated with the set of rows and airflow associated with the set of aisles;
determine that a current power demand associated with a first row of the set of rows or a current airflow demand associated with a first aisle of the set of aisles adjacent to the first row satisfy a migration condition;
select, for migration, a workload instance executing on a first virtual machine of the set of virtual machines that is hosted on a server in the first row;
create a second virtual machine;
deploy the second virtual machine to a second server in a second row different than the first row and in a second aisle different than the first aisle; and
migrate the workload instance from the first virtual machine to the second virtual machine.

8. A method comprising:
receiving a workload for execution on a set of virtual machines in a data center, the data center comprising a set of rows of servers, the set of rows separated by a set of aisles;
estimating airflow capacities for the set of aisles and power capacities for the set of rows of servers;
determining, based on an estimated demand of the workload, a first subset aisles of the set of aisles that have sufficient estimated airflow capacity to host the set of virtual machines and a first subset of rows of set of rows that have sufficient estimated power capacity to host the set of virtual machines;
selecting a set of servers in the first subset of aisles and in the first subset of rows based at least on a workload type associated with the workload, a distribution of workloads of the workload type in the first subset of aisles, and a distribution of workloads of the workload type in the first subset of rows;
deploying the set of virtual machine to the set of servers;
receiving a first request associated with the workload; and
routing the first request to a first virtual machine of the set of virtual machines.

9. The method of claim 8, wherein said routing the first request comprises:
determining a second subset of aisles of the set of aisles that have sufficient estimated airflow capacity to process the first request, a second subset of rows of the set of rows that have sufficient estimated power capacity to process the first request, and a subset of servers that have sufficient capacity to process the first request; and
selecting the first virtual machine based at least on the first virtual machine being deployed to a server that is in the second subset of aisles, in the second subset of rows, and in the subset of servers,
wherein preferably said routing the first request to the first virtual machine is performed responsive to at least one of:
determining that the first virtual machine processed a previous request from a customer associated with the first request;
determining that the first virtual machine currently processes other requests associated with the workload; or
determining that routing the first request to the first virtual machine balances a distribution of requests associated with the workload across the set of virtual machines.

10. The method of claim 8 or 9, further comprising:
monitoring power demand associated with the set of rows and airflow associated with the set of aisles;
determining that a current power demand associated with a first row of the set of rows or a current airflow demand associated with a first aisle of the set of aisles adjacent to the first row satisfy a reconfiguration condition; and
modifying, for a workload instance executing on a server in the first row, at least one of a processor frequency parameter, a batch size parameter, a parallelism parameter, a model size parameter, or a model quantization parameter.

11. The method of one of claims 8 to 10, wherein said selecting a set of servers comprises at least one of:
categorizing servers in the first subset of aisles and the first subset of rows as cool servers or warm servers based on estimated temperatures associated with the servers, wherein servers categorized as cool servers are associated with lower estimated temperatures than servers categorized as warm servers;
responsive to determining that the workload type is an infrastructure-as-a-service (laaS) workload, selecting, as the set of servers, servers in the first subset of aisles and the first subset of rows that are categorized as cool servers; and
responsive to determining that the workload type is a software-as-a-service (SaaS) workload, selecting, as the set of servers, servers in the first subset of aisles and the first subset of rows that are categorized as warm servers; and
determining, for the first subset of aisles and the first subset of rows, a distribution of infrastructure-as-a-service (laaS) workloads and software-as-a-service (SaaS) workloads based on a number of laaS workloads and a number of SaaS workloads deployed to the first subset of aisles and the first subset of rows;
categorizing, based on the distribution, the first subset of aisles and the first subset of rows as at least one of SaaS-heavy, balanced, or IaaS-heavy, wherein aisles or rows categorized as SaaS-heavy have a higher distribution of SaaS workloads than servers categorized as balanced or IaaS-heavy, and aisles or rows categorized as balanced have a higher distribution of SaaS workloads than servers categorized as IaaS-heavy;
responsive to determining that the workload type is an laaS workload, selecting, as the set of servers, servers in the first subset of aisles that are categorized as SaaS-heavy and the first subset of rows that are categorized as SaaS-heavy; and
responsive to determining that the workload type is a SaaS workload, selecting, as the set of servers, servers in the first subset of aisles that are categorized as laaS-heavy and the first subset of rows that are categorized as IaaS-heavy.

12. The method of one of claims 8 to 11, further comprising:
monitoring power demand associated with the set of rows and airflow associated with the set of aisles;
determining that a current power demand associated with a first row of the set of rows or a current airflow demand associated with a first aisle of the set of aisles adjacent to the first row satisfy a migration condition;
selecting, for migration, a workload instance executing on a first virtual machine of the set of virtual machines that is hosted on a server in the first row;
creating a second virtual machine;
deploying the second virtual machine to a second server in a second row different than the first row and in a second aisle different than the first aisle; and
migrating the workload instance from the first virtual machine to the second virtual machine.

13. A computer-readable storage medium comprising executable instructions that are executed by a processor to cause the processor to:
receive a workload for execution on a set of virtual machines in a data center, the data center comprising a set of rows of servers, the set of rows separated by a set of aisles;
estimate airflow capacities for the set of aisles and power capacities for the set of rows of servers;
determine, based on an estimated demand of the workload, a first subset aisles of the set of aisles that have sufficient estimated airflow capacity to host the set of virtual machines and a first subset of rows of set of rows that have sufficient estimated power capacity to host the set of virtual machines;
select a set of servers in the first subset of aisles and in the first subset of rows based at least on a workload type associated with the workload, a distribution of workloads of the workload type in the first subset of aisles, and a distribution of workloads of the workload type in the first subset of rows;
deploy the set of virtual machine to the set of servers;
receive a first request associated with the workload; and
route the first request to a first virtual machine of the set of virtual machines.

14. The computer-readable storage medium of claim 13, wherein the executable instructions are executed by the processor to further cause the processor to:
determine a second subset of aisles of the set of aisles that have sufficient estimated airflow capacity to process the first request, a second subset of rows of the set of rows that have sufficient estimated power capacity to process the first request, and a subset of servers that have sufficient capacity to process the first request; and
select the first virtual machine based at least on the first virtual machine being deployed to a server that is in the second subset of aisles, in the second subset of rows, and in the subset of servers,
wherein preferably the executable instructions are executed by the processor to further cause the processor to route the first request to the first virtual machine responsive to at least one of:
determining that the first virtual machine processed a previous request from a customer associated with the first request;
determining that the first virtual machine currently processes other requests associated with the workload; or
determining that routing the first request to the first virtual machine balances a distribution of requests associated with the workload across the set of virtual machines.

15. The computer-readable storage medium of claim 13 or 14, at least one of:
wherein the executable instructions are executed by the processor to further cause the processor to:
monitor power demand associated with the set of rows and airflow associated with the set of aisles;
determine that a current power demand associated with a first row of the set of rows or a current airflow demand associated with a first aisle of the set of aisles adjacent to the first row satisfy a reconfiguration condition; and
modify, for a workload instance executing on a server in the first row, at least one of a processor frequency parameter, a batch size parameter, a parallelism parameter, a model size parameter, or a model quantization parameter;
wherein, to select the set of servers, the executable instructions are executed by the processor to cause the processor to:
categorize servers in the first subset of aisles and the first subset of rows as cool servers or warm servers based on estimated temperatures associated with the servers, wherein servers categorized as cool servers are associated with lower estimated temperatures than servers categorized as warm servers;
responsive to determining that the workload type is an infrastructure-as-a-service (laaS) workload, select, as the set of servers, servers in the first subset of aisles and the first subset of rows that are categorized as cool servers; and
responsive to determining that the workload type is a software-as-a-service (SaaS) workload, select, as the set of servers, servers in the first subset of aisles and the first subset of rows that are categorized as warm servers; and
wherein, to select the set of servers, the executable instructions are executed by the processor to cause the processor to:
determine, for the first subset of aisles and the first subset of rows, a distribution of infrastructure-as-a-service (laaS) workloads and software-as-a-service (SaaS) workloads based on a number of laaS workloads and a number of SaaS workloads deployed to the first subset of aisles and the first subset of rows;
categorize, based on the distribution, the first subset of aisles and the first subset of rows as at least one of SaaS-heavy, balanced, or IaaS-heavy, wherein aisles or rows categorized as SaaS-heavy have a higher distribution of SaaS workloads than servers categorized as balanced or IaaS-heavy, and aisles or rows categorized as balanced have a higher distribution of SaaS workloads than servers categorized as IaaS-heavy;
responsive to determining that the workload type is an laaS workload, select, as the set of servers, servers in the first subset of aisles that are categorized as SaaS-heavy and the first subset of rows that are categorized as SaaS-heavy; and
responsive to determining that the workload type is a SaaS workload, select, as the set of servers, servers in the first subset of aisles that are categorized as laaS-heavy and the first subset of rows that are categorized as IaaS-heavy.
